# EUROPEAN PATENT SPECIFICATION

(11) **EP 4 332 764 B1**
(45) Date of publication and mention of the grant of the patent: **24.12.2025**
(21) Application number: 22831863.0
(22) Date of filing: 24.06.2022
(51) Int. Cl.: G06F 9/455, G06F 9/50, G06F 9/48

(54) **VIRTUAL MACHINE MIGRATION METHOD AND RELATED APPARATUS**
VERFAHREN ZUR MIGRATION EINER VIRTUELLEN MASCHINE UND ZUGEHÖRIGE VORRICHTUNG
PROCÉDÉ DE MIGRATION DE MACHINE VIRTUELLE ET APPAREIL ASSOCIÉ

(30) Priority: 30.06.2021 CN 202110745182
(43) Date of publication of application: 06.03.2024
(73) Proprietor: Huawei Technologies Co., Ltd., Shenzhen, Guangdong 518129 (CN)
(72) Inventor: ZHENG, Chuan, Shenzhen, Guangdong 518129 (CN); ZHANG, Bo, Shenzhen, Guangdong 518129 (CN); YU, Xiating, Shenzhen, Guangdong 518129 (CN)
(74) Representative: MERH-IP Matias Erny Reichl Hoffmann Patentanwälte PartG mbB
(86) International application number: PCT/CN2022/100987
(87) International publication number: WO 2023/274049

(56) References cited:
- CN-A- 102 790 793
- CN-A- 102 866 915
- CN-A- 112 379 974
- US-A1- 2014 298 338
- US-A1- 2017 003 990
- ZIYU LI ET AL: "Optimizing VM live migration strategy based on migration time cost modeling", ARCHITECTURES FOR NETWORKING AND COMMUNICATIONS SYSTEMS, ACM, 2 PENN PLAZA, SUITE 701 NEW YORK NY 10121-0701 USA, 17 March 2016 (2016-03-17), pages 99 - 109, XP058080162, ISBN: 978-1-4503-4183-7, DOI: 10.1145/2881025.2881035

## Description

### TECHNICAL FIELD

This application relates to the computer field, and in particular, to a virtual machine migration method and a related apparatus.

### BACKGROUND

Live migration (live migration) is an extremely important part of a virtualization technology. In a virtualization environment, a service is loaded and run on a virtual machine (VM), the virtual machine runs on a physical machine, and one or more virtual machines may run on a physical machine. Alive migration function allows the virtual machines to be migrated online from an original physical machine to another physical host without being suspended or restarted.

Currently, a common virtual machine migration manner in the industry includes a pre-copy (pre-copy) migration mechanism. To be specific, when a virtual machine is running, a memory page is cyclically and iteratively migrated to a destination physical host, a memory dirty page is recorded at the same time, and a memory dirty page generated in a previous round of cyclic copy is transmitted in each round of cyclic copy. When a quantity of remaining memory dirty pages is less than a preset threshold or a number of iterations exceeds a preset maximum number of iterations, copying is stopped. Then, a virtual machine on a source physical host is suspended, and a state of a central processing unit (CPU) and a last round of unsynchronized memory pages are copied to the destination physical host. Finally, the virtual machine may resume running on the destination physical host.

However, in a conventional VM live migration solution, only a live migration solution for a single virtual machine in a physical machine is optimized and designed. In some scenarios, a plurality of virtual machines in a physical machine need to be live migrated. Therefore, an optimization solution for performing live migration on the plurality of virtual machines needs to be provided.

Document US 2014/298338 A1 generally discloses a non-transitory computer-readable recording medium which has a program stored therein for causing a computer to execute a process. The process includes estimating a cost of executing a live migration of a virtual machine, using a count value of an access counter for counting the number of accesses to a memory allocated to the virtual machine, a capacity of the memory, and a bandwidth of data transfer between physical machines relating to the live migration. The publication "Optimizing VM live migration strategy based on migration time cost modeling"by Ziyu Li et al, in ARCHITECTURES FOR NETWORKING AND COMMUNICATIONS SYSTEMS, ACM, 2 PENN PLAZA, SUITE 701 NEW YORK NY 10121-0701 USA, 17 March 2016, pages 99-109 concerns the building of a model to quantitatively predict live migration time by analyzing key parameters that affect VM live migration time such as VM memory size, VM memory dirtying rate, network bandwidth, memory zero page amount and memory access patterns.

### SUMMARY

This application provides a virtual machine migration method, a virtual machine migration apparatus, a computer-readable storage medium and a computer program product, having the features of respective independent claims. The dependent claims relate to preferred embodiments.

This application provides a virtual machine migration method, applied to a physical machine, where a plurality of VMs including a first virtual machine VM and a second VM run on the physical machine. The method includes:
obtaining a migration cost of the first VM and a migration cost of the second VM, where the migration cost indicates a computing resource required during VM live migration, the computing resource may be a memory resource, an I/O resource, a CPU resource, or the like, and the computing resource is not limited herein; performing, based on a case in which the migration cost of the first VM is less than the migration cost of the second VM, live migration on the first VM by using a first computing resource, where the first computing resource is an idle computing resource in the physical machine; and performing, based on a case in which live migration on the first VM is completed, live migration on the second VM by using a second computing resource, where the second computing resource is a computing resource allocated when the first VM runs on the physical machine.

Computing resources in the physical machine are limited, a large part of computing resources are allocated to running VMs for use, and there are few remaining available computing resources. Therefore, when a plurality of VMs running on the physical machine are live migrated, the plurality of VMs cannot be live migrated at the same time while ensuring that a load does not exceed a maximum limit. However, in some scenarios, for example, during a cold upgrade or hardware replacement of a host system, all virtual machines on a host need to be live migrated. In this case, a plurality of VMs need to be live migrated.

When live migration is performed, different VMs require different sizes (which may also be referred to as a migration cost in embodiments of this application) of computing resources. When live migration is just started, because most VMs are still running, few computing resources in the physical machine can be used. If some VMs with high migration costs are live migrated at this time, overload may occur, and a migration rate is excessively low. In this application, a sequence of performing live migration on a plurality of VMs may be determined based on migration costs of the plurality of VMs when the plurality of VMs are live migrated.

In embodiments of this application, a sequence of performing live migration on VMs may be determined based on migration costs of the VMs during migration. When there are few computing resources, a VM with a low migration cost is preferentially live migrated, and a computing resource allocated to the VM on which live migration has been completed becomes idle. Then, a remaining VM with a high migration cost is live migrated by using the idle computing resource. This improves migration efficiency and reduces migration time overheads.

Specifically, after the VM (for example, the first VM in embodiments of this application) with the low migration cost is preferentially live migrated, a computing resource (for example, the second computing resource) allocated to the VM (for example, the first VM in embodiments of this application) on which live migration has been completed becomes idle. Then, the remaining VM (for example, the second VM in embodiments of this application) with the high migration cost is live migrated by using the idle computing resource (for example, the second computing resource). This improves migration efficiency and reduces migration time overheads.

In a possible implementation, the migration cost may be related to a dirty page change rate of a VM. A larger dirty page change rate indicates that I/O of the VM is larger, a large quantity of copying operations and a large quantity of times of copying need to be performed during live migration, and the migration cost is also very high. Therefore, the migration cost may be positively correlated with the dirty page change rate of the VM, that is, on the premise that other cases are the same, a higher dirty page change rate indicates a higher migration cost of the VM.

Specifically, the first VM and the second VM are used as an example. A dirty page change rate of the first VM may be obtained, and the migration cost of the first VM is determined based on the dirty page change rate of the first VM. Similarly, a dirty page change rate of the second VM may be obtained, and the migration cost of the second VM is determined based on the dirty page change rate of the second VM.

The migration cost is positively correlated with the dirty page change rate. That is, on the premise that other cases are the same, a higher dirty page change rate of the first VM indicates a higher migration cost of the first VM. Similarly, on the premise that other cases are the same, a higher dirty page change rate of the second VM indicates a higher migration cost of the second VM.

In a possible implementation, a hash value of a randomly sampled memory page may be compared with a hash value that is of the randomly sampled memory page and that is calculated after a period. If the hash value changes, it may be determined that the sampled memory page is a dirty page, and a dirty page change rate is calculated based on a quantity of dirty pages. In embodiments of this application, to improve efficiency of calculating the dirty page change rate and reduce time required for calculating the dirty page change rate, a memory may be divided into a plurality of memory blocks (including a plurality of memory pages), and one first thread is allocated to each memory block, so that a plurality of first threads may collect, in parallel, statistics on a quantity of dirty pages in a corresponding memory block (each first thread may perform, for example, a process of randomly sampling a memory page, a process of calculating a hash value of the memory page, a process of determining a dirty page based on a change status of the hash value before and after a period, and a process of collecting statistics on a quantity of dirty pages). Because processes of calculating the first threads are executed in parallel, that is, the plurality of first threads simultaneously perform related calculation on the dirty page change rate at a same moment, efficiency of calculating the dirty page change rate can be improved, and time overheads of calculating the dirty page change rate can be reduced.

The first VM and the second VM are used as an example. In a possible implementation, a plurality of memory pages in a virtual memory of the first VM may be randomly sampled, and the dirty page change rate of the first VM is determined based on a change status of a hash value of each of the plurality of memory pages before and after a preset time interval. Similarly, a plurality of memory pages in a virtual memory of the second VM may be randomly sampled, and the dirty page change rate of the second VM is determined based on a change status of a hash value of each of the plurality of memory pages before and after the preset time interval.

In a possible implementation, the virtual memory of the first VM and the virtual memory of the second VM may be separately divided into M memory blocks, and one first thread is allocated to each memory block; a plurality of memory pages in a corresponding memory block are randomly sampled by using each of M first threads; change statuses of hash values of the plurality of memory pages in the corresponding memory block before and after the preset time interval are calculated in parallel by using each of the M first threads; and the dirty page change rates of the first VM and the second VM are determined based on a change status of a hash value of each of the plurality of memory pages before and after the preset time interval.

In a possible implementation, the migration cost may be related to a size of a memory refresh range of a VM. A larger size of the memory refresh range indicates that a larger range of a memory page of the VM is modified, a large quantity of copying operations and a large quantity of times of copying need to be performed during live migration, and the migration cost is also very high. Therefore, the migration cost may be positively correlated with the size of the memory refresh range of the VM, that is, on the premise that other cases are the same, a larger size of the memory refresh range indicates a higher migration cost of the VM.

Specifically, the first VM and the second VM are used as an example. A size of a memory refresh range of the first VM may be obtained, and the migration cost of the first VM is determined based on the size of the memory refresh range of the first VM. Similarly, a size of a memory refresh range of the second VM may be obtained, and the migration cost of the second VM is determined based on the size of the memory refresh range of the second VM.

The migration cost is positively correlated with a size of a memory refresh range. That is, on the premise that other cases are the same, a larger size of the memory refresh range of the first VM indicates a higher migration cost of the first VM. Similarly, on the premise that other cases are the same, a larger size of the memory refresh range of the second VM indicates a higher migration cost of the second VM.

In a possible implementation, a plurality of memory pages in a virtual memory of the first VM and a plurality of memory pages in a virtual memory of the second VM may be randomly sampled, and the sizes of the memory refresh ranges of the first VM and the second VM are determined based on a change status of a hash value of each of the plurality of memory pages before and after a preset time interval, where the hash value of each memory page is obtained through calculation by using a hardware hash instruction.

In a possible implementation, the virtual memory of the first VM and the virtual memory of the second VM may be separately divided into M memory blocks, and one first thread is allocated to each memory block; a plurality of memory pages in a corresponding memory block are separately randomly sampled by using each of M first threads; and then change statuses of hash values of the plurality of memory pages in the corresponding memory block before and after the preset time interval are calculated in parallel by using each of the M first threads.

In embodiments of this application, after a VM (for example, the first VM in embodiments of this application) with a low migration cost is preferentially live migrated, a computing resource (for example, the second computing resource) allocated to the VM (for example, the first VM in embodiments of this application) on which live migration has been completed becomes idle. Then, a remaining VM (for example, the second VM in embodiments of this application) with a high migration cost is live migrated by using the idle computing resource (for example, the second computing resource). This improves migration efficiency and reduces migration time overheads.

In a possible implementation, during live migration, migration data may be compressed, to reduce a data volume during migration and improve migration efficiency. Specifically, the second VM is used as an example. Threads (for example, N second threads below) used for data compression may be allocated to the second VM, and when the second VM is live migrated, the N second threads may be used to compress migration data of the second VM.

In a possible implementation, before the second VM is live migrated, N second threads may be determined based on a size of the second computing resource, and the N second threads are bound to the second computing resource, where a value of N is positively correlated with the size of the second computing resource, that is, a larger size of the second computing resource indicates a larger value of N. To be specific, when the second VM is live migrated, a higher amount of concurrent compression processing on the migration data is performed, and compression processing may be performed at a higher speed. Further, when the second VM is live migrated, the migration data in the second VM may be compressed in parallel by using the N second threads, to obtain compressed migration data, and the second VM is live migrated based on the compressed migration data by using the second computing resource.

In a possible implementation, a sequence of performing migration on VMs may be further determined based on compression performance of the VMs. Specifically, in a possible implementation, a third VM also runs on the physical machine. The second VM and the third VM are used as an example. Before live migration is performed on the second VM by using the second computing resource, compression performance of the second VM and compression performance of the third VM may be further calculated by using the second computing resource based on a case in which live migration on the first VM is completed, where the compression performance indicates data compression performance of performing compression processing on data of a VM. Then, live migration is performed, based on a case in which the compression performance of the second VM is higher than the compression performance of the third VM, on the second VM by using the second computing resource.

It should be understood that the compression performance herein may be obtained by using a single compression algorithm, or may be obtained by using a plurality of compression algorithms. When compression performance that is of different VMs and that is calculated by using a single compression algorithm is the same, compression performance of different VMs may be calculated by using a plurality of compression algorithms, and a sequence of performing migration on VMs and a compression algorithm may be determined based on the compression performance that is of different VMs and that is calculated by using the plurality of compression algorithms. For example, compression performance that is of a VM 1 and that is calculated by using a compression algorithm 1 is 0.2, compression performance that is of a VM 2 and that is calculated by using the compression algorithm 1 is 0.2, compression performance that is of the VM 1 and that is calculated by using a compression algorithm 2 is 0.1, and compression performance that is of the VM 2 and that is calculated by using the compression algorithm 2 is 0.3. In this case, the VM 1 may be first migrated, and the compression algorithm 2 is used when the VM 1 is migrated. Then, the VM 2 is migrated, and the compression algorithm 1 is used when the VM 2 is migrated.

The compression performance may be a data compression rate, for example, a de-redundancy degree, or may be a compression speed. This is not limited herein.

In a possible implementation, after the performing live migration on the second VM by using the second computing resource, live migration may be performed, based on a case in which live migration on the second VM is completed, on the third VM by using the second computing resource and a third computing resource, where the third computing resource is a computing resource allocated when the second VM runs on the physical machine.

In a possible implementation, the virtual memory of the second VM and a virtual memory of the third VM may be separately divided into X memory blocks, and one third thread is allocated to each memory block; a plurality of memory pages in a corresponding memory block are randomly sampled by using each of X third threads; and the plurality of memory pages in the corresponding memory block are compressed in parallel by using each of the X third threads, to obtain a compression result, where the compression result is used to determine the compression performance of the second VM and the compression performance of the third VM. This is equivalent to using a plurality of threads to concurrently calculate compression performance of a VM. Therefore, a calculating speed is improved.

In a possible implementation, after the performing live migration on the second VM by using the second computing resource, the method further includes: performing, based on a case in which live migration on the second VM is completed, live migration on the third VM by using the second computing resource and/or a third computing resource, where the third computing resource is a computing resource allocated when the second VM runs on the physical machine. For example, the second computing resource may be used to perform live migration on the third VM, the third computing resource may be used to perform live migration on the third VM, or the second computing resource and the third computing resource may be used to perform live migration on the third VM.

It should be understood that the second computing resource herein may be all or a part of computing resources that are allocated to the first VM and that are used by the first VM to run on the physical machine; or the second computing resource herein may be all or a part of computing resources that are allocated to the second VM and that are used by the second VM to run on the physical machine.

According to a second aspect, this application provides a virtual machine migration apparatus, applied to a physical machine, where a plurality of VMs including a first virtual machine VM and a second VM run on the physical machine, and the apparatus includes:
an obtaining module, configured to obtain a migration cost of the first VM and a migration cost of the second VM, where the migration cost indicates a computing resource required during VM live migration; and
a live migration module, configured to: perform, based on a case in which the migration cost of the first VM is less than the migration cost of the second VM, live migration on the first VM by using a first computing resource, where the first computing resource is an idle computing resource in the physical machine; and perform, based on a case in which live migration on the first VM is completed, live migration on the second VM by using a second computing resource, where the second computing resource is a computing resource allocated when the first VM runs on the physical machine.

In a possible implementation, the obtaining module is specifically configured to:
obtain dirty page change rates of the first VM and the second VM, and determine the migration cost of the first VM and the migration cost of the second VM based on the dirty page change rates, where the migration cost is positively correlated with the dirty page change rate.

In a possible implementation, the obtaining module is specifically configured to:
randomly sample a plurality of memory pages in a virtual memory of the first VM and a plurality of memory pages in a virtual memory of the second VM; and
determine the dirty page change rates of the first VM and the second VM based on a change status of a hash value of each of the plurality of memory pages before and after a preset time interval, where the hash value of each memory page is obtained through calculation by using a hardware hash instruction.

In a possible implementation, the obtaining module is specifically configured to:
obtain sizes of memory refresh ranges of the first VM and the second VM, and determine the migration cost of the first VM and the migration cost of the second VM based on the sizes of the memory refresh ranges, where the migration cost is positively correlated with the size of the memory refresh range.

In a possible implementation, the obtaining module is specifically configured to:
randomly sample a plurality of memory pages in a virtual memory of the first VM and a plurality of memory pages in a virtual memory of the second VM; and
determine the sizes of the memory refresh ranges of the first VM and the second VM based on a change status of a hash value of each of the plurality of memory pages before and after a preset time interval, where the hash value of each memory page is obtained through calculation by using a hardware hash instruction.

In a possible implementation, the obtaining module is specifically configured to:
separately divide the virtual memory of the first VM and the virtual memory of the second VM into M memory blocks, where one first thread is allocated to each memory block;
randomly sample, by using each of M first threads, a plurality of memory pages in a corresponding memory block; and
calculate in parallel, by using each of the M first threads, change statuses of hash values of the plurality of memory pages in the corresponding memory block before and after the preset time interval.

In a possible implementation, before performing, based on a case in which live migration on the first VM is completed, live migration on the second VM by using the second computing resource, the obtaining module is further configured to:
determine N second threads based on a size of the second computing resource, where a value of N is positively correlated with the size of the second computing resource, and the N second threads are configured to perform compression processing on migration data by using the second computing resource during VM live migration.

The live migration module is specifically configured to:
compress the migration data in the second VM in parallel by using the N second threads, to obtain compressed migration data; and
perform live migration on the second VM by using the second computing resource based on the compressed migration data.

In a possible implementation, a third VM also runs on the physical machine.

The live migration module is further configured to:
before performing live migration on the second VM by using the second computing resource, calculate, based on a case in which live migration on the first VM is completed, compression performance of the second VM and compression performance of the third VM by using the second computing resource, where the compression performance indicates data compression performance of performing compression processing on data of a VM.

The live migration module is specifically configured to:
perform, based on a case in which the compression performance of the second VM is higher than the compression performance of the third VM, live migration on the second VM by using the second computing resource.

In a possible implementation, the live migration module is specifically configured to:
separately divide the virtual memory of the second VM and a virtual memory of the third VM into X memory blocks, where one third thread is allocated to each memory block;
randomly sample, by using each of X third threads, a plurality of memory pages in a corresponding memory block; and
compress in parallel, by using each of the X third threads, the plurality of memory pages in the corresponding memory block, to obtain a compression result, where the compression result is used to determine the compression performance of the second VM and the compression performance of the third VM.

In a possible implementation, the live migration module is further configured to:
after performing live migration on the second VM by using the second computing resource, perform, based on a case in which live migration on the second VM is completed, live migration on the third VM by using the second computing resource and/or a third computing resource, where the third computing resource is a computing resource allocated when the second VM runs on the physical machine.

According to the foregoing technical solutions, it can be learned that embodiments of this application have the following advantages.

Embodiments of this application provide the virtual machine migration method, applied to the physical machine, where a plurality of VMs including the first virtual machine VM and the second VM run on the physical machine, and the method includes: obtaining the migration cost of the first VM and the migration cost of the second VM, where the migration cost indicates a computing resource required during VM live migration; performing, based on a case in which the migration cost of the first VM is less than the migration cost of the second VM, live migration on the first VM by using the first computing resource, where the first computing resource is an idle computing resource in the physical machine; and performing, based on a case in which live migration on the first VM is completed, live migration on the second VM by using the second computing resource, where the second computing resource is a computing resource allocated when the first VM runs on the physical machine. In the foregoing manner, a sequence of performing live migration on VMs is determined based on migration costs of the VMs during migration. When there are few computing resources, a VM with a low migration cost is preferentially live migrated, and a computing resource allocated to the VM on which live migration has been completed becomes idle. Then, a remaining VM with a high migration cost is live migrated by using the idle computing resource. This improves migration efficiency and reduces migration time overheads.

### BRIEF DESCRIPTION OF DRAWINGS

FIG. 1 is a schematic diagram of an application architecture according to an embodiment of this application;
FIG. 2 is a schematic diagram of an application architecture according to an embodiment of this application;
FIG. 3 is a schematic diagram of a migration architecture of virtual machine live migration;
FIG. 4a is a schematic flowchart of a virtual machine migration method according to an embodiment of this application;
FIG. 4b is a schematic diagram of virtual machine migration according to an embodiment of this application;
FIG. 5 is a schematic diagram of dirty page change rate calculation according to an embodiment of this application;
FIG. 6 is a schematic diagram of dirty page change rate calculation according to an embodiment of this application;
FIG. 7 is a schematic diagram of memory refresh range calculation according to an embodiment of this application;
FIG. 8 is a schematic diagram of memory refresh range calculation according to an embodiment of this application;
FIG. 9 is a schematic flowchart of a virtual machine migration method according to an embodiment of this application;
FIG. 10 is a schematic flowchart of a virtual machine migration apparatus according to an embodiment of this application;
FIG. 11 is a schematic diagram of a computer-readable storage medium according to this application; and
FIG. 12 is a schematic diagram of a computer device according to this application.

### DESCRIPTION OF EMBODIMENTS

The following describes embodiments of this application with reference to the accompanying drawings. It is clear that the described embodiments are merely some but not all of embodiments of this application. A person of ordinary skill in the art may learn that the technical solutions provided in embodiments of this application are also applicable to a similar technical problem as a technology develops and a new scenario emerges.

In the specification, claims, and accompanying drawings of this application, the terms "first", "second", and the like are intended to distinguish between similar objects but do not necessarily indicate a specific order or sequence. It should be understood that the data termed in such a way are interchangeable in proper circumstances so that embodiments described herein can be implemented in other orders than the order illustrated or described herein. In addition, the terms "include", "contain" and any other variants thereof are intended to cover the non-exclusive inclusion, for example, a process, method, system, product, or device that includes a list of steps or modules is not necessarily limited to those steps or modules, but may include other steps or modules not expressly listed or inherent to such a process, method, system, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved.

For ease of understanding of embodiments of the present invention, several elements introduced in descriptions of embodiments of this application are first described herein.

### (1) Virtual machine VM

One or more virtual computers may be simulated on a physical computer by using virtual machine software. These virtual machines operate like real computers, operating systems and applications may be installed on the virtual machines, and the virtual machines may further access network resources. For an application running in a virtual machine, the virtual machine operates like a real computer.

### (2) Hardware layer

A hardware layer is a hardware platform on which a virtualized environment runs. The hardware layer may include a plurality of types of hardware. For example, a hardware layer of a computing node may include a processor (such as a CPU) and a memory, and may further include a high-speed/low-speed input/output (I/O, Input/Output) device such as a network adapter or a memory.

### (3) Host (host)

A host serves as a management layer and is configured to: manage and allocate a hardware resource, present a virtual hardware platform for a virtual machine, and implement virtual machine scheduling and isolation. The host may be a virtual machine monitor (VMM). In addition, sometimes, the VMM cooperates with one privileged virtual machine, and the VMM and the privileged virtual machine form a host. The virtual hardware platform provides various hardware resources for virtual machines running on the virtual hardware platform. For example, the virtual hardware platform provides a virtual processor, a virtual memory, a virtual disk, a virtual network adapter, and the like. The virtual disk may correspond to a file or a logical block device of the host. The virtual machine runs on the virtual hardware platform prepared by the host for the virtual machine, and one or more virtual machines run on the host.

### (3) Memory dirty page

A system may read data with frequent read/write operations into a memory, to improve a read/write speed. This process may be referred to as caching. For example, in a Linux operating system, a page is used as a unit for caching. When data in a cache is modified by a write operation, a page is marked by a kernel as a memory dirty page. The memory dirty page may also be referred to as a dirty page. In other words, data in the memory is different from data in a hard disk, and a changed data page is referred to as the dirty page.

It should be understood that data means data received or sent on a data plane, and a page is a storage unit of the memory. For example, a size of the page may usually be 4K, 2M, or 1G. The data plane is a concept relative to a control plane. The data plane is mainly used to store a service flow of I/O and network I/O. The control plane may be used to deliver an instruction of a control class or a configuration class. For example, a migration instruction may belong to the instruction of the control class.

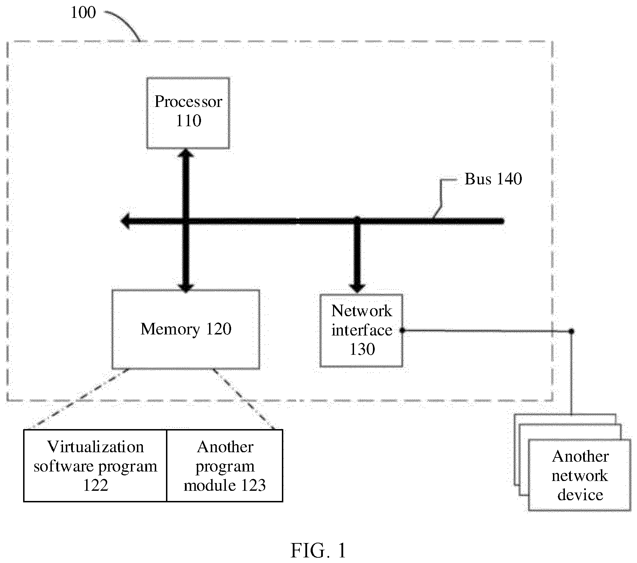

This application may be applied to a physical machine. FIG. 1 is a schematic diagram of a hardware structure of a physical machine according to an embodiment of this application.

As shown in FIG. 1, a hardware structure of a physical machine 100 may include components such as a processor 110, a memory 120, and a network interface 130 (also referred to as a network interface card or a network adapter). The processor 110 may be a single-core processor or a multi-core processor. When the processor 110 is the multi-core processor, methods provided in this application may run on one core, or may run on different cores in a distributed manner. There may be one processor 110, or may be a plurality of processors 110, and the plurality of processors may be of a same type or different types. Types of the processor include a CPU, a graphics processing unit (GPU), a microprocessor, a coprocessor, or the like. The network interface 130 may be configured to connect to another network device, and the connection includes a wireless connection and a wired connection. The memory 120 includes a volatile memory and a non-volatile memory. Generally, the non-volatile memory stores a virtualized software program 122 and another program module 123. Virtualization of the hardware structure of the physical machine 100 after the virtualized software program 122 is read and run by the processor 110 includes creating a host machine layer, a plurality of virtual computers, and the like. After a software program that is used for virtual machine migration and that is provided in this application is read and run by the processor 110, various virtual machine migration methods provided in embodiments of this application are implemented. The software program provided in this application may be combined in the virtualized software program 122.

The foregoing components may be connected through a bus 140. There may be one or more buses 140. The bus 140 includes an advanced microcontroller bus architecture (AMBA) industry standard architecture (ISA) bus, a micro channel architecture (MCA) bus, an extended ISA (extended-ISA) bus, a video electronics standards association (VESA) local bus, a peripheral component interconnect (PCI) bus, and the like.

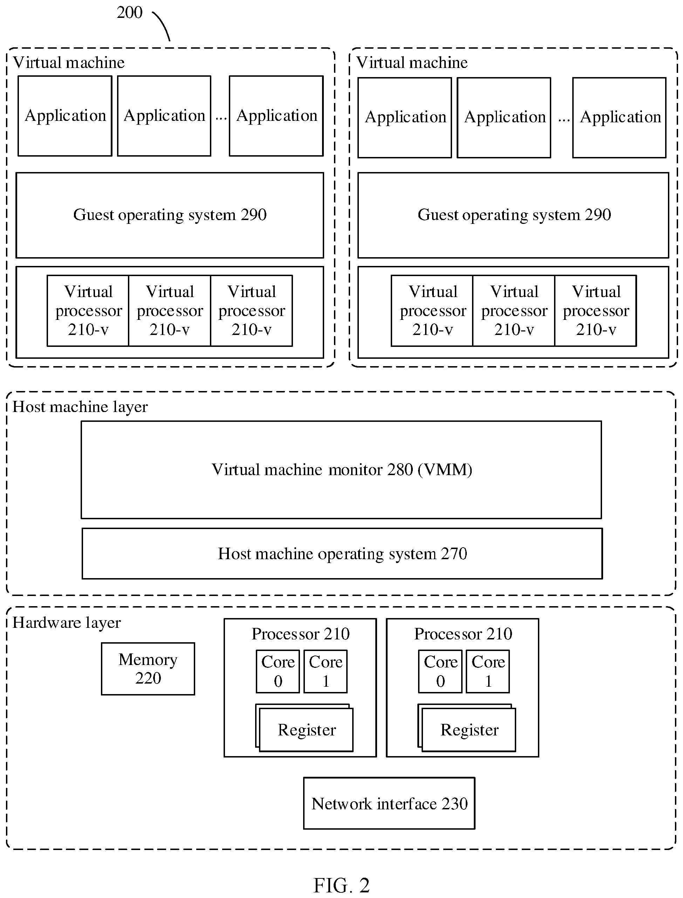

FIG. 2 is a schematic diagram of a structure of a physical machine 200 according to an embodiment of this application. The physical machine 200 may include a hardware layer, a host machine layer, and a virtualization layer. The virtualization layer includes two virtual machines. In FIG. 2, an example in which the hardware layer includes hardware such as two processors 210, a memory 220, and a network interface 230 is used for description. In another embodiment, there may be more or fewer processors 210 and more or fewer virtual machines.

In some other embodiments, the virtual machine may include a container (container), and the container is equivalent to an application. In some other embodiments, the virtualization layer may be implemented by using a lightweight virtualization technology, for example, a libOS. The libOS is a runtime library that can provide a function similar to that of an operating system and that can be linked with an application for running, so that all resources necessary for running of the application are managed by the application instead of the operating system. For example, the libOS, for example, unikernel, OSv, or dune, may be considered as a lightweight virtual computer. One libOS usually includes one application. An entire libOS includes one or more libraries, and the libOS is linked to the application to form a single address space image. In embodiments of this application, a virtual machine implemented by using a conventional virtualization technology is usually used as an example. For another type of virtualization architecture, refer to implementations of the virtual machine.

The processor 210 may include one or more physical cores. (a physical core is sometimes referred to as a core for short in this application).

The "physical core" represents a minimum processing unit in this application. As shown in FIG. 2, in this embodiment, each processor has a plurality of registers and two physical cores, that is, a core 0 and a core 1. In some other embodiments, the processor may include more or fewer cores, and different processors may include different quantities of cores.

A host machine operating system 270 and a virtual machine monitor 280 (VMM) are deployed in the host machine. The VMM 280 is equivalent to a hypervisor or another type of virtual monitoring apparatus in another virtualization architecture. The VMM 280 may be deployed inside the host machine operating system 270, or may be deployed separately from the host machine operating system 270. The VMM 280 is responsible for managing one or more virtual machines running on the VMM 280.

A virtual machine (VM) may include a virtual hardware layer, a guest operating system 290, and a variety of applications. The virtual hardware layer includes virtual hardware, for example, a virtual memory (not shown in the figure), a virtual processor 210-v, and the like. As shown in FIG. 2, in this embodiment, there are two virtual machines, and each virtual machine includes three virtual processors 210-v. The virtual processor 210-v is implemented by combining software and hardware, and running of the virtual processor 210-v is actually implemented by reading and running a software program by a physical core. For example, a physical core reads a software program and runs the software program in a specific mode (for example, a non-Root mode of x86) of hardware-assisted virtualization of the physical core to implement one virtual processor 210-v. Therefore, the virtual processor 210-v needs to be scheduled to a specific physical core.

The virtual processor 210-v and the physical core may be in a binding relationship. To be specific, if a virtual processor 210-v may always run on a specific physical core and cannot be scheduled to run on another physical core, the virtual processor is bound to a core. If a virtual processor 210-v may be scheduled to run on different physical cores based on requirements, the virtual processor is not bound to a core.

In this embodiment, a total quantity of virtual processors 210-v is 6, and is greater than a quantity 4 of physical cores. This scenario is referred to as physical processor overcommitment. In a case of physical processor overcommitment, a plurality of virtual processors may share a same physical core in a time slicing manner or in another manner. The shared physical core is referred to as a non-exclusive core. Certainly, the non-exclusive core may also occur in a case of non-overcommitment. If a physical core is bound to a virtual processor and is not shared by another virtual processor, the physical core is an exclusive core.

As a virtual monitoring apparatus, the VMM 280 is responsible for scheduling virtual processors 210-v of VMs. For example, a kernel-based virtual machine (KVM) is a typical VMM. Scheduling of the virtual processors 210-v by the VMM 280 includes swapping in a virtual processor and swapping out a virtual processor. First, the VMM 280 creates and initializes an object of a VM, and then creates three virtual processors 210-v for the VM. When one VM includes a plurality of virtual processors 210-v, generally, one virtual processor 210-v is a primary virtual processor, and the other virtual processors 210-v are subordinate virtual processors. The virtual processor 210-v is not associated with a physical core at the beginning of being created. The VMM 280 schedules a specific virtual processor 210-v onto a specific physical core according to a policy. This is referred to as swapping in a virtual processor. The VMM 280 suspends the virtual processor 210-v or migrates the virtual processor 210-v out of the physical core. This is referred to as swapping out a virtual processor. In a core-binding scenario, each time a virtual processor is swapped in, the virtual processor is scheduled onto a same core. In a non-core binding scenario, before scheduling, the VMM 280 may determine, based on a current running status of a system and/or a scheduling algorithm, a core onto which the virtual processor 210-v is to be scheduled.

It should be noted that a virtual processor 210-v may not immediately trap into running after being swapped in. Before the virtual processor 210-v is swapped in and does not trap in, a host machine (which specifically is the VMM) may further implement some configurations on the virtual processor 210-v, and then the virtual processor 210-v traps into a guest mode.

Embodiments of this application may be applied to a VM live migration scenario. Virtual machine live migration refers to a process of migrating a running virtual machine from an original host to a destination host, and a service deployed in an interrupted virtual machine has no perception in a migration process.

For example, a virtual machine runs on a host. When the host is faulty or resources are not evenly allocated (for example, overload or underload), the virtual machine may be migrated, to ensure normal running of services on the virtual machine.

Currently, application scenarios for live migration include but are not limited to the following several types.

Scenario 1: When a host is faulty or overloaded, a running virtual machine may be migrated to another host to avoid service interruption, ensure normal running of a service, and implement elastic expansion.

Scenario 2: When most hosts are underloaded, virtual machines may be migrated and integrated, to reduce a quantity of hosts, improve resource utilization, save energy, reduce emissions, and reduce costs.

Scenario 3: When a host needs to upgrade and maintain hardware or software, to avoid affecting a service of a virtual machine on the host, the virtual machine needs to be migrated to another physical host in advance. In actual application, a case in which a virtual machine needs to be migrated may exist. For example, when it is found, through monitoring, that a specific physical machine is overloaded, performance of a VM deteriorates, and contention for a central processing unit of the VM is excessively intense, a migration operation needs to be performed, to migrate a corresponding VM to another physical machine with available resources. To ensure that services are not interrupted during a migration process, a live migration (live migration) technology of a virtual machine, that is, virtual machine saving/recovery, is usually used. To be specific, the technology means that running statuses of all virtual machines are integrally saved and can be quickly restored to an original hardware platform or even a different hardware platform, and after the running statuses of the virtual machines are restored, the virtual machines still run smoothly, and a user does not notice any difference.

For example, a virtual machine migration process may be online migration, that is, migration is performed while ensuring normal running of a service on a source-end virtual machine. The source-end virtual machine may copy memory data to another physical host while running. When only an extremely small amount of memory data needs to be copied, the source-end virtual machine may stop running and copy a remaining small part of the memory data to the another physical host at one time. After copying is completed, a destination virtual machine may be reactivated on the another physical host. This implements online migration of the virtual machine.

In actual application, a case in which a virtual machine needs to be migrated may exist. For example, when it is found, through monitoring, that a specific physical machine is overloaded, performance of a VM deteriorates, and contention for a central processing unit of the VM is excessively intense, a migration operation needs to be performed, to migrate a corresponding VM to another physical machine with available resources. To ensure that services are not interrupted during a migration process, a live migration (live migration) technology of a virtual machine, that is, virtual machine saving/recovery, is usually used. To be specific, the technology means that running statuses of all virtual machines are integrally saved and can be quickly restored to an original hardware platform or even a different hardware platform, and after the running statuses of the virtual machines are restored, the virtual machines still run smoothly, and a user does not notice any difference.

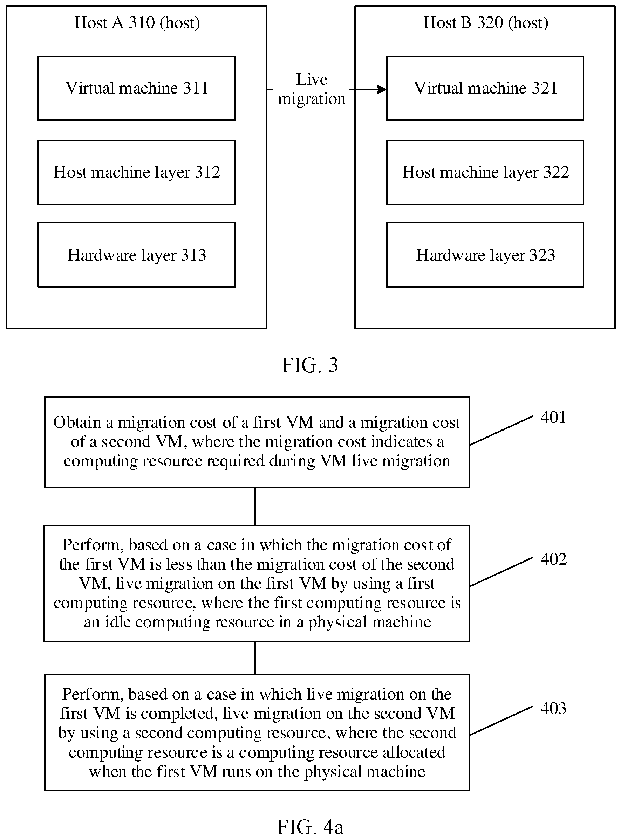

For example, FIG. 3 is a schematic diagram of live migration according to an embodiment of this application. As shown in FIG. 3, a host 310 and a host 320 are included. Schematic diagrams of structures of the host 310 and the host 320 may be shown in FIG. 2. The host 310 may include one or more virtual machines 311, a host machine layer 312, and a hardware layer 313. The host 320 may include one or more virtual machines 321, a host machine layer 322, and a hardware layer 323. When the foregoing case in which live migration is required exists, the virtual machines in the host 310 may be migrated to the host 320. In other words, running statuses of all the virtual machines in the host 310 may be integrally stored, and can be quickly restored to the virtual machines 321 in the host 320 at the same time. After the running statuses of the virtual machines are restored, the virtual machines still run smoothly, and a user does not notice any difference.

The following describes in detail the virtual machine migration method provided in embodiments of this application by using specific embodiments.

FIG. 4a is a schematic flowchart of a virtual machine migration method according to an embodiment of this application. As shown in FIG. 4a, the virtual machine migration method provided in embodiments of this application may include the following steps.

401: Obtain a migration cost of a first VM and a migration cost of a second VM, where the migration cost indicates a computing resource required during VM live migration.

Step 401 may be performed by a module such as a VMM or a QEMU in a physical machine.

The virtual machine migration method in embodiments of this application may be applied to a physical machine, and a plurality of VMs including the first virtual machine VM and the second VM, and the module such as the VMM or the QEMU run on the physical machine.

The module such as the VMM or the QEMU may obtain the migration cost of the first VM and the migration cost of the second VM, where the migration cost indicates a computing resource required during VM live migration. The module such as the VMM or the QEMU may further obtain a migration cost of another VM in the plurality of VMs other than the first VM and the second VM. This is not limited herein.

Computing resources in the physical machine are limited, a large part of computing resources are allocated to running VMs for use, and there are few remaining available computing resources. Therefore, when a plurality of VMs running on the physical machine are live migrated, the plurality of VMs cannot be live migrated at the same time while ensuring that a load does not exceed a maximum limit. However, in some scenarios, for example, during a cold upgrade or hardware replacement of a host system, all virtual machines on a host need to be live migrated. In this case, a plurality of VMs need to be live migrated.

When live migration is performed, different VMs require different sizes (which may also be referred to as a migration cost in embodiments of this application) of computing resources. When live migration is just started, because most VMs are still running, few computing resources in the physical machine can be used. If some VMs with high migration costs are live migrated at this time, overload may occur, and a migration rate is excessively low. In this application, a sequence of performing live migration on a plurality of VMs may be determined based on migration costs of the plurality of VMs when the plurality of VMs are live migrated.

In embodiments of this application, an example in which the plurality of VMs include the first VM and the second VM is used for description.

In embodiments of this application, a sequence of performing live migration on VMs may be determined based on migration costs of the VMs during migration. When there are few computing resources, a VM with a low migration cost is preferentially live migrated, and a computing resource allocated to the VM on which live migration has been completed becomes idle. Then, a remaining VM with a high migration cost is live migrated by using the idle computing resource. This improves migration efficiency and reduces migration time overheads.

The migration cost may indicate a computing resource (for example, may be a memory resource) required during VM live migration.

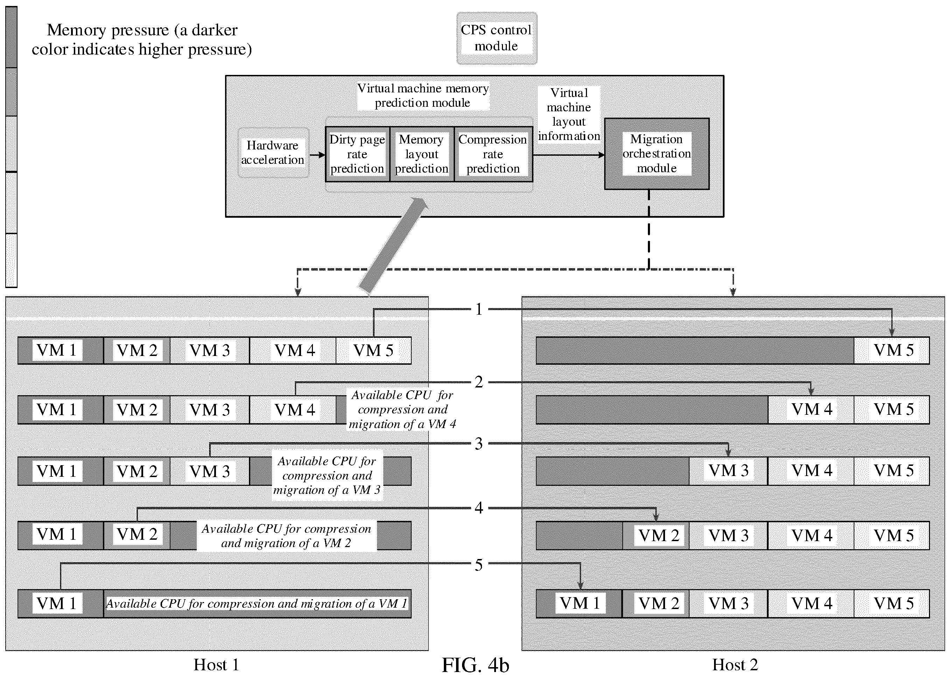

FIG. 4b is a schematic diagram of live migration. Migration costs of a VM 5, a VM 4, a VM 3, a VM 2, and a VM 1 gradually increase. Therefore, live migration may be first performed on the VM 5. After the VM 5 is live migrated, the VM 4 may be live migrated by using a computing resource previously allocated to the VM 5. After the VM 4 is live migrated, the VM 3 may be live migrated by using computing resources previously allocated to the VM 5 and the VM 4. After the VM 3 is live migrated, the VM 2 may be live migrated based on computing resources previously allocated to the VM 5, the VM 4, and the VM 3. After the VM 2 is live migrated, the VM 1 may be live migrated by using computing resources previously allocated to the VM 5, the VM 4, the VM 3, and the VM 2. Further, the VM 5, the VM 4, the VM 3, the VM 2, and the VM 1 are live migrated from the host 1 to the host 2.

The following describes how to determine a migration cost of a VM.

In a possible implementation, the migration cost may be related to a dirty page change rate of a VM. A larger dirty page change rate indicates that I/O of the VM is larger, a large quantity of copying operations and a large quantity of times of copying need to be performed during live migration, and the migration cost is also very high. Therefore, the migration cost may be positively correlated with the dirty page change rate of the VM, that is, on the premise that other cases are the same, a higher dirty page change rate indicates a higher migration cost of the VM.

Specifically, the first VM and the second VM are used as an example. A dirty page change rate of the first VM may be obtained, and the migration cost of the first VM is determined based on the dirty page change rate of the first VM. Similarly, a dirty page change rate of the second VM may be obtained, and the migration cost of the second VM is determined based on the dirty page change rate of the second VM.

The migration cost is positively correlated with the dirty page change rate. That is, on the premise that other cases are the same, a higher dirty page change rate of the first VM indicates a higher migration cost of the first VM. Similarly, on the premise that other cases are the same, a higher dirty page change rate of the second VM indicates a higher migration cost of the second VM.

The following describes how to determine a dirty page change rate of a VM.

In a possible implementation, a hash value of a randomly sampled memory page may be compared with a hash value that is of the randomly sampled memory page and that is calculated after a period. If the hash value changes, it may be determined that the sampled memory page is a dirty page, and a dirty page change rate is calculated based on a quantity of dirty pages. In embodiments of this application, to improve efficiency of calculating the dirty page change rate and reduce time required for calculating the dirty page change rate, a memory may be divided into a plurality of memory blocks (including a plurality of memory pages), and one first thread is allocated to each memory block, so that a plurality of first threads may collect, in parallel, statistics on a quantity of dirty pages in a corresponding memory block (each first thread may perform, for example, a process of randomly sampling a memory page, a process of calculating a hash value of the memory page, a process of determining a dirty page based on a change status of the hash value before and after a period, and a process of collecting statistics on a quantity of dirty pages). Because processes of calculating the first threads are executed in parallel, that is, the plurality of first threads simultaneously perform related calculation on the dirty page change rate at a same moment, efficiency of calculating the dirty page change rate can be improved, and time overheads of calculating the dirty page change rate can be reduced.

The first VM and the second VM are used as an example. In a possible implementation, a plurality of memory pages in a virtual memory of the first VM may be randomly sampled, and the dirty page change rate of the first VM is determined based on a change status of a hash value of each of the plurality of memory pages before and after a preset time interval. Similarly, a plurality of memory pages in a virtual memory of the second VM may be randomly sampled, and the dirty page change rate of the second VM is determined based on a change status of a hash value of each of the plurality of memory pages before and after the preset time interval.

In a possible implementation, the virtual memory of the first VM and the virtual memory of the second VM may be separately divided into M memory blocks, and one first thread is allocated to each memory block; a plurality of memory pages in a corresponding memory block are randomly sampled by using each of M first threads; change statuses of hash values of the plurality of memory pages in the corresponding memory block before and after the preset time interval are calculated in parallel by using each of the M first threads; and the dirty page change rates of the first VM and the second VM are determined based on a change status of a hash value of each of the plurality of memory pages before and after the preset time interval.

In a possible implementation, the hash value of each memory page is obtained through calculation by using a hardware hash instruction.

In embodiments of this application, based on a hardware acceleration and a multi-thread concurrency mechanism, time for hash calculation is reduced, and a high-precision memory dirty page rate prediction is implemented.

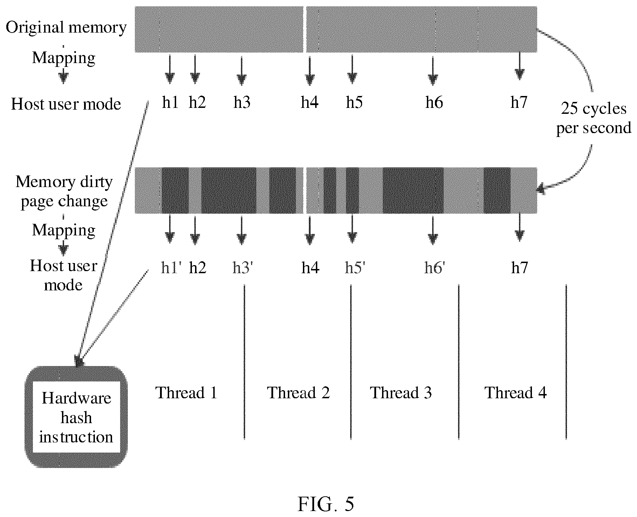

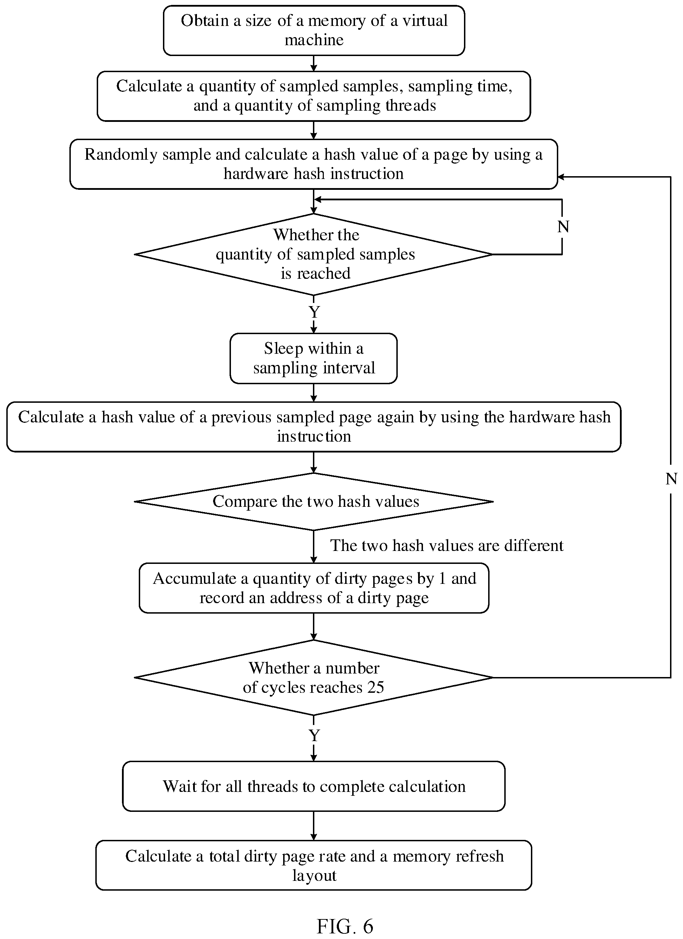

For example, with reference to FIG. 5 and FIG. 6, in an implementation, a size of a virtual memory of a VM (for example, the first VM or the second VM) may be first obtained, and a quantity of sampled samples in the memory, sampling time, and a quantity of sampling threads (that is, the foregoing first thread) may be determined. Then, the memory of the virtual machine is cut into memory blocks, and one first thread is allocated to each memory block, where each first thread is responsible for sampling one memory block. Then, a sampled memory page is obtained, a hash value of the memory page is calculated by using a hardware hash instruction, the random sampling step is repeatedly performed until sampling ends, and the hash value is recorded. In addition, sampling is not performed within a sampling interval (that is, the foregoing preset time interval). After the sampling interval ends, a hash value of the foregoing randomly sampled memory page is calculated by using the hardware hash instruction, and the hash value calculated before the sampling interval is compared with the hash value calculated after the sampling interval, to determine whether the hash value changes. For each memory page whose hash value calculated after the sampling interval is different from a hash value calculated before the sampling interval, a quantity of dirty pages is accumulated by 1, and an address of the dirty page is recorded. After a quantity of cycles reaches a preset value (for example, 25 times), a dirty page change rate may be calculated until execution of all threads is completed. For a manner of calculating the dirty page change rate, refer to a manner of calculating a dirty page change rate in the conventional technology. Details are not described herein again.

In a possible implementation, the migration cost may be related to a size of a memory refresh range of a VM. A larger size of the memory refresh range indicates that a larger range of a memory page of the VM is modified, a large quantity of copying operations and a large quantity of times of copying need to be performed during live migration, and the migration cost is also very high. Therefore, the migration cost may be positively correlated with the size of the memory refresh range of the VM, that is, on the premise that other cases are the same, a larger size of the memory refresh range indicates a higher migration cost of the VM.

Specifically, the first VM and the second VM are used as an example. A size of a memory refresh range of the first VM may be obtained, and the migration cost of the first VM is determined based on the size of the memory refresh range of the first VM. Similarly, a size of a memory refresh range of the second VM may be obtained, and the migration cost of the second VM is determined based on the size of the memory refresh range of the second VM.

The migration cost is positively correlated with a size of a memory refresh range. That is, on the premise that other cases are the same, a larger size of the memory refresh range of the first VM indicates a higher migration cost of the first VM. Similarly, on the premise that other cases are the same, a larger size of the memory refresh range of the second VM indicates a higher migration cost of the second VM.

In a possible implementation, a plurality of memory pages in a virtual memory of the first VM and a plurality of memory pages in a virtual memory of the second VM may be randomly sampled, and the sizes of the memory refresh ranges of the first VM and the second VM are determined based on a change status of a hash value of each of the plurality of memory pages before and after a preset time interval, where the hash value of each memory page is obtained through calculation by using a hardware hash instruction.

In a possible implementation, the virtual memory of the first VM and the virtual memory of the second VM may be separately divided into M memory blocks, and one first thread is allocated to each memory block; a plurality of memory pages in a corresponding memory block are separately randomly sampled by using each of M first threads; and then change statuses of hash values of the plurality of memory pages in the corresponding memory block before and after the preset time interval are calculated in parallel by using each of the M first threads.

Refer to FIG. 5 and FIG. 6. In an implementation, a size of a virtual memory of a VM (for example, the first VM or the second VM) may be first obtained, and a quantity of sampled samples in the memory, sampling time, and a quantity of sampling threads (that is, the foregoing first thread) may be determined. Then, the memory of the virtual machine is cut into memory blocks, and one first thread is allocated to each memory block, where each first thread is responsible for sampling one memory block. Then, a sampled memory page is obtained, a hash value of the memory page is calculated by using a hardware hash instruction, the random sampling step is repeatedly performed until sampling ends, and the hash value is recorded. In addition, sampling is not performed within a sampling interval (that is, the foregoing preset time interval). After the sampling interval ends, a hash value of the foregoing randomly sampled memory page is calculated by using the hardware hash instruction, and the hash value calculated before the sampling interval is compared with the hash value calculated after the sampling interval, to determine whether the hash value changes. For each memory page whose hash value calculated after the sampling interval is different from a hash value calculated before the sampling interval, a quantity of dirty pages is accumulated by 1, and an address of the dirty page is recorded. After a quantity of cycles reaches a preset value (for example, 25 times), a size of a memory refresh range may be calculated until execution of all threads is completed. For a manner of calculating the size of the memory refresh range, refer to manners of calculating a memory dirty page change rate in the foregoing embodiment and in the conventional technology. For similarities, details are not described herein again.

402: Perform, based on a case in which the migration cost of the first VM is less than the migration cost of the second VM, live migration on the first VM by using a first computing resource, where the first computing resource is an idle computing resource in the physical machine.

When live migration is just started, because most VMs are still running, few computing resources in the physical machine can be used. If some VMs with high migration costs are live migrated at this time, overload may occur, and a migration rate is excessively low. In this application, when a plurality of VMs are live migrated, a VM (for example, the first VM in embodiments of this application) with a low migration cost is preferentially live migrated, and when the first VM is live migrated, the second VM may run normally.

403: Perform, based on a case in which live migration on the first VM is completed, live migration on the second VM by using a second computing resource, where the second computing resource is a computing resource allocated when the first VM runs on the physical machine.

In embodiments of this application, after a VM (for example, the first VM in embodiments of this application) with a low migration cost is preferentially live migrated, a computing resource (for example, the second computing resource) allocated to the VM (for example, the first VM in embodiments of this application) on which live migration has been completed becomes idle. Then, a remaining VM (for example, the second VM in embodiments of this application) with a high migration cost is live migrated by using the idle computing resource (for example, the second computing resource). This improves migration efficiency and reduces migration time overheads.

In a possible implementation, during live migration, migration data may be compressed, to reduce a data volume during migration and improve migration efficiency. Specifically, the second VM is used as an example. Threads (for example, N second threads below) used for data compression may be allocated to the second VM, and when the second VM is live migrated, the N second threads may be used to compress migration data of the second VM.

In a possible implementation, before the second VM is live migrated, the N second threads may be determined based on a size of the second computing resource, and the N second threads are bound to the second computing resource, where a value of N is positively correlated with the size of the second computing resource, that is, a larger size of the second computing resource indicates a larger value of N. To be specific, when the second VM is live migrated, a higher amount of concurrent compression processing on the migration data is performed, and compression processing may be performed at a higher speed. Further, when the second VM is live migrated, the migration data in the second VM may be compressed in parallel by using the N second threads, to obtain compressed migration data, and the second VM is live migrated based on the compressed migration data by using the second computing resource.

In a possible implementation, a virtual machine with a small dirty page change rate and a small refresh range may be preferentially migrated based on virtual machine dirty page change rate prediction and memory layout prediction. After some virtual machines are vacated, multi-thread compression may be enabled based on a status of computing resources, and a compression thread (that is, the foregoing second thread) is dynamically bound to an idle CPU range. Then, a virtual machine with a high compression rate may be preferentially migrated based on virtual machine compression rate prediction. The rest can be deduced by analogy. A virtual machine that is migrated later obtains more compression threads, has a larger indirect bandwidth, tolerates higher pressure, and has a higher migration speed.

In a possible implementation, a sequence of performing migration on VMs may be further determined based on compression rates of the VMs. Specifically, in a possible implementation, a third VM also runs on the physical machine. The second VM and the third VM are used as an example. Before live migration is performed on the second VM by using the second computing resource, a compression rate of the second VM and a compression rate of the third VM may be further calculated by using the second computing resource based on a case in which live migration on the first VM is completed, where the compression rate indicates a data compression rate for performing compression processing on data of a VM. Then, live migration is performed, based on a case in which the compression rate of the second VM is higher than the compression rate of the third VM, on the second VM by using the second computing resource.

In a possible implementation, after live migration is performed on the second VM by using the second computing resource, live migration may be performed, based on a case in which live migration on the second VM is completed, on the third VM by using the second computing resource and a third computing resource, where the third computing resource is a computing resource allocated when the second VM runs on the physical machine.

In a possible implementation, the virtual memory of the second VM and a virtual memory of the third VM may be separately divided into X memory blocks, and one third thread is allocated to each memory block; a plurality of memory pages in a corresponding memory block are randomly sampled by using each of X third threads; and the plurality of memory pages in the corresponding memory block are compressed in parallel by using each of the X third threads, to obtain a compression result, where the compression result is used to determine the compression rate of the second VM and the compression rate of the third VM. This is equivalent to using a plurality of threads to concurrently calculate a compression rate of a VM. Therefore, a calculating speed is improved.

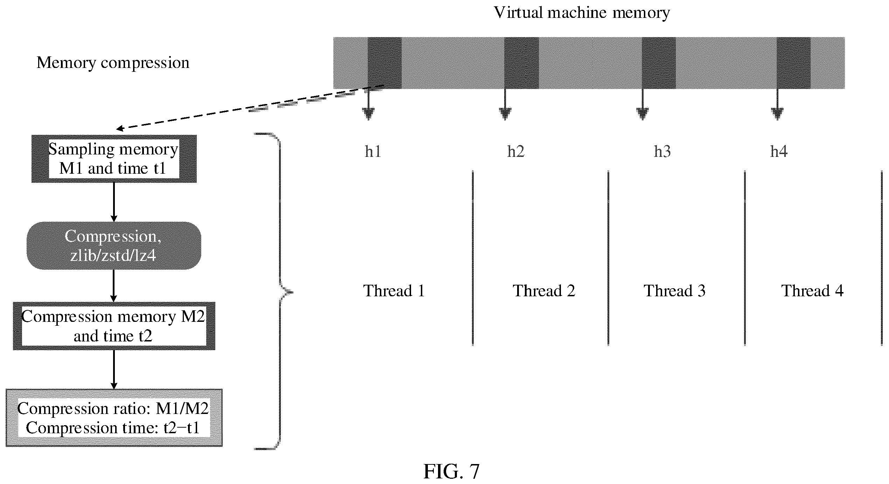

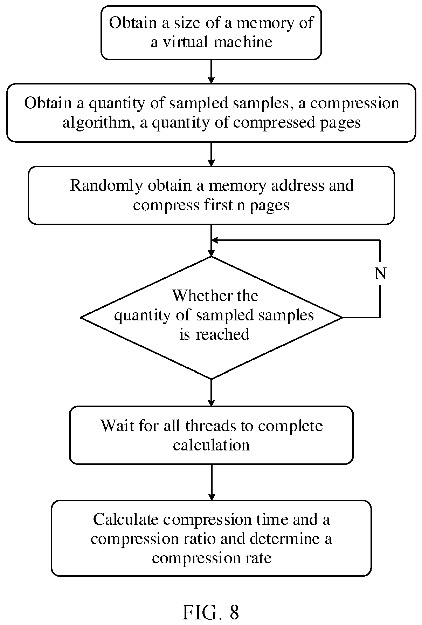

Refer to FIG. 7 and FIG. 8. A size of a memory of a virtual machine may be obtained, and a quantity of sampled samples in the memory, a compression algorithm, and a quantity of compressed pages may be determined. Then, the memory of the virtual machine may be divided into memory blocks, and each thread is responsible for calculating one memory block. Then, a memory page is randomly sampled, n pages are compressed, the foregoing steps are repeatedly performed until the quantity of compressed pages is reached. Compression time and a compression ratio are calculated, and a compression rate is determined until execution of all threads is completed. Compression efficiency reduction time=(1-compression ratio)×total memory/migration bandwidth-compression time. Longer compression efficiency reduction time indicates a higher compression ratio.

In embodiments of this application, the compression thread may be dynamically bound to an idle resource of a host, so that the compression thread and a virtual machine thread are isolated and do not affect each other.

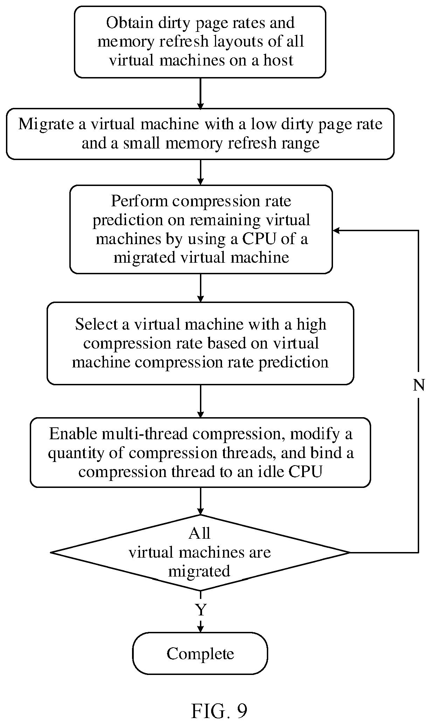

FIG. 9 is a schematic flowchart of a live migration method. Specifically, a virtual machine with a small dirty page change rate and a small refresh range may be preferentially migrated based on virtual machine dirty page change rate prediction and memory layout prediction. After some virtual machines are vacated, multi-thread compression is enabled based on a status of CPU resources of a host, and a compression thread is dynamically bound to an idle CPU range. Then, a virtual machine with a high compression rate may be preferentially migrated based on virtual machine compression rate prediction. The rest can be deduced by analogy. A virtual machine that is migrated later obtains more compression threads, has a larger indirect bandwidth, tolerates higher pressure, and has a higher migration speed.

Embodiments of this application may be used when all virtual machines on a host need to be live migrated during a cold upgrade or hardware replacement of a host system, so that the virtual machines on the host can tolerate higher pressure, and live migration is accelerated while supporting migration of a high-pressure virtual machine. Therefore, a migration speed is improved.

According to embodiments of this application, lossless migration of a medium-pressure or high-pressure virtual machine may be supported, elastic compression migration can be implemented through migration orchestration and dynamic core binding of a migration thread, migration time of virtual machines is reduced by 20%, and a success rate of migrating virtual machines on a host is improved to 99.9%.

In addition, in this application, accurate prediction of an online dirty page rate of a high-precision virtual machine may be implemented by using hardware acceleration and multi-thread acceleration, and a virtual machine memory sampling method may be used to implement pre-compression, obtain virtual machine migration compression effect, obtain virtual machine online memory profile prediction, and complete host-granularity migration sequence orchestration. In addition, lossless migration of low-pressure virtual machines is extended to lossless migration of medium-pressure and high-pressure virtual machines. Therefore, migration success rate is higher, overall migration time is shortened, and a migration success rate is improved.

An embodiment of this application provides a virtual machine migration method, applied to a physical machine, where a plurality of VMs including a first virtual machine VM and a second VM run on the physical machine, and the method includes: obtaining a migration cost of the first VM and a migration cost of the second VM, where the migration cost indicates a computing resource required during VM live migration; performing, based on a case in which the migration cost of the first VM is less than the migration cost of the second VM, live migration on the first VM by using a first computing resource, where the first computing resource is an idle computing resource in the physical machine; and performing, based on a case in which live migration on the first VM is completed, live migration on the second VM by using a second computing resource, where the second computing resource is a computing resource allocated when the first VM runs on the physical machine. In the foregoing manner, a sequence of performing live migration on VMs is determined based on migration costs of the VMs during migration. When there are few computing resources, a VM with a low migration cost is preferentially live migrated, and a computing resource allocated to the VM on which live migration has been completed becomes idle. Then, a remaining VM with a high migration cost is live migrated by using the idle computing resource. This improves migration efficiency and reduces migration time overheads.

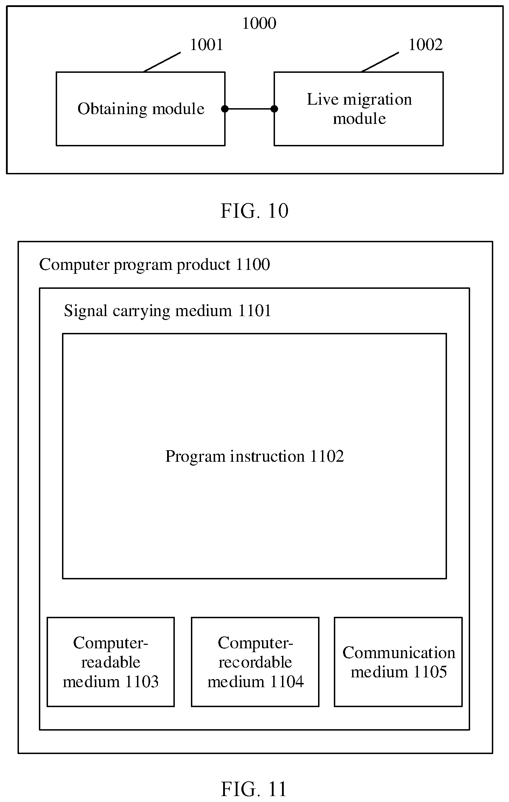

FIG. 10 is a schematic diagram of a structure of a virtual machine migration apparatus according to an embodiment of this application. The virtual machine migration apparatus may be used in a physical machine, and a plurality of VMs including a first virtual machine VM and a second VM run on the physical machine. The apparatus 1000 includes:
an obtaining module 1001, configured to obtain a migration cost of the first VM and a migration cost of the second VM, where the migration cost indicates a computing resource required during VM live migration.

For a specific description of the obtaining module 1001, refer to the description of the step 401 in the foregoing embodiments. Details are not described herein again.

The apparatus 1000 further includes a live migration module 1002 that is configured to: perform, based on a case in which the migration cost of the first VM is less than the migration cost of the second VM, live migration on the first VM by using a first computing resource, where the first computing resource is an idle computing resource in the physical machine; and perform, based on a case in which live migration on the first VM is completed, live migration on the second VM by using a second computing resource, where the second computing resource is a computing resource allocated when the first VM runs on the physical machine.

For a specific description of the live migration module 1002, refer to the descriptions of the step 402 and the step 403 in the foregoing embodiments. Details are not described herein again.

In a possible implementation, the obtaining module 1001 is specifically configured to:
obtain dirty page change rates of the first VM and the second VM, and determine the migration cost of the first VM and the migration cost of the second VM based on the dirty page change rates, where the migration cost is positively correlated with the dirty page change rate.

In a possible implementation, the obtaining module 1001 is specifically configured to:
randomly sample a plurality of memory pages in a virtual memory of the first VM and a plurality of memory pages in a virtual memory of the second VM; and
determine the dirty page change rates of the first VM and the second VM based on a change status of a hash value of each of the plurality of memory pages before and after a preset time interval, where the hash value of each memory page is obtained through calculation by using a hardware hash instruction.

In a possible implementation, the obtaining module 1001 is specifically configured to:
obtain sizes of memory refresh ranges of the first VM and the second VM, and determine the migration cost of the first VM and the migration cost of the second VM based on the sizes of the memory refresh ranges, where the migration cost is positively correlated with the size of the memory refresh range.

In a possible implementation, the obtaining module 1001 is specifically configured to:
randomly sample a plurality of memory pages in a virtual memory of the first VM and a plurality of memory pages in a virtual memory of the second VM; and
determine the sizes of the memory refresh ranges of the first VM and the second VM based on a change status of a hash value of each of the plurality of memory pages before and after a preset time interval, where the hash value of each memory page is obtained through calculation by using a hardware hash instruction.

In a possible implementation, the obtaining module 1001 is specifically configured to:
separately divide the virtual memory of the first VM and the virtual memory of the second VM into M memory blocks, where one first thread is allocated to each memory block;
randomly sample, by using each of M first threads, a plurality of memory pages in a corresponding memory block; and
calculate in parallel, by using each of the M first threads, change statuses of hash values of the plurality of memory pages in the corresponding memory block before and after the preset time interval.

In a possible implementation, before performing, based on a case in which live migration on the first VM is completed, live migration on the second VM by using the second computing resource, the obtaining module 1001 is further configured to:
determine N second threads based on a size of the second computing resource, where a value of N is positively correlated with the size of the second computing resource, and the N second threads are configured to perform compression processing on migration data by using the second computing resource during VM live migration.

The live migration module 1002 is specifically configured to:
compress the migration data in the second VM in parallel by using the N second threads, to obtain compressed migration data; and
perform live migration on the second VM by using the second computing resource based on the compressed migration data.

In a possible implementation, a third VM also runs on the physical machine.

The live migration module 1002 is further configured to:
before performing live migration on the second VM by using the second computing resource, calculate, based on a case in which live migration on the first VM is completed, a compression rate of the second VM and a compression rate of the third VM by using the second computing resource, where the compression rate indicates a data compression rate for performing compression processing on data of a VM.

The live migration module 1002 is specifically configured to:
perform, based on a case in which the compression rate of the second VM is higher than the compression rate of the third VM, live migration on the second VM by using the second computing resource.

In a possible implementation, the live migration module 1002 is specifically configured to:
separately divide the virtual memory of the second VM and a virtual memory of the third VM into X memory blocks, where one third thread is allocated to each memory block;
randomly sample, by using each of X third threads, a plurality of memory pages in a corresponding memory block; and
compress in parallel, by using each of the X third threads, the plurality of memory pages in the corresponding memory block, to obtain a compression result, where the compression result is used to determine the compression rate of the second VM and the compression rate of the third VM.

In a possible implementation, the live migration module 1002 is further configured to:
after performing live migration on the second VM by using the second computing resource, perform, based on a case in which live migration on the second VM is completed, live migration on the third VM by using the second computing resource and a third computing resource, where the third computing resource is a computing resource allocated when the second VM runs on the physical machine.

Refer to FIG. 11. This application further provides a computer-readable storage medium. In some embodiments, the method disclosed in FIG. 2 may be implemented as computer program instructions encoded in a machine-readable format on the computer-readable storage medium or encoded on another non-transitory medium or product. FIG. 11 schematically illustrates a conceptual partial view of an example computer program product arranged according to at least some embodiments shown herein. The example computer program product includes a computer program for executing a computer thread on a computing device. In an embodiment, an example computer program product 1100 is provided by using a signal carrying medium 1101. The signal carrying medium 1101 may include one or more program instructions 1102, and when the one or more program instructions 1102 are run by one or more processors, the functions or some of the functions described in FIG. 4a may be provided. Therefore, for example, with reference to the embodiment shown in FIG. 4a, one or more of features in the step 401 to the step 403 may be borne by one or more instructions associated with the signal carrying medium 1101. In addition, the program instructions 1102 in FIG. 11 are also described as example instructions.

In some other embodiments, the computer program product may also refer to a pure software program, that is, the computer program product does not include a storage medium. Many computer program products in the conventional technology are produced and sold in a form of "software", for example, a terminal device may download a software application.

In some examples, the signal carrying medium 1101 may include a computer-readable medium 1103, such as, but not limited to, a hard disk drive, a compact disc (CD), a digital video disc (DVD), a digital magnetic tape, a memory, a read-only memory (ROM), or a random access memory (RAM). In some implementations, the signal carrying medium 1101 may include a computer-recordable medium 1104, such as, but not limited to, a memory, a read/write (R/W) CD, an R/W DVD, and the like. In some implementations, the signal carrying medium 1101 may include a communication medium 1105, such as, but not limited to, a digital and/or analog communication medium (for example, a fiber optic cable, a waveguide, a wired communication link, a wireless communication link, and the like). Therefore, for example, the signal carrying medium 1101 may be conveyed by the communication medium 1105 in a wireless form (for example, a wireless communication medium that complies with the IEEE 1102.11 standard or another transmission protocol). The one or more program instructions 1102 may be, for example, one or more computer-executable instructions or one or more logic implementation instructions. In some examples, a computing device may be configured to provide various operations, functions, or actions in response to the program instructions 1102 transmitted to the computing device through one or more of the computer-readable medium 1103, the computer-recordable medium 1104, and/or the communication medium 1105. It should be understood that an arrangement described herein is merely used as an example. Therefore, it may be understood by a person skilled in the art that other arrangements and other elements (for example, machines, interfaces, functions, sequences, and groups of functions) can be used instead, and some elements may be omitted together based on an expected result. In addition, many of the described elements are functional entities that can be implemented as discrete or distributed components, or implemented in any suitable combination at any suitable location in combination with another component.

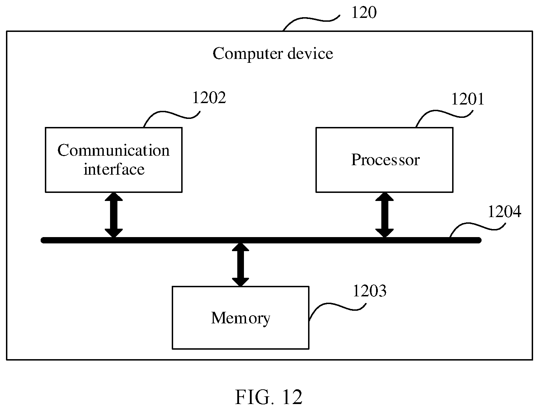

FIG. 12 is a schematic diagram of a possible logical structure of a computer device 120 in the foregoing embodiments according to an embodiment of this application. The computer device 120 may be the virtual machine migration apparatus in FIG. 10. The computer device 120 may include a processor 1201, a communication interface 1202, a memory 1203, and a bus 1204. The processor 1201, the communication interface 1202, and the memory 1203 are connected to each other through the bus 1204. In this embodiment of this application, the processor 1201 is configured to perform steps in the step 401 to the step 403 in the embodiment shown in FIG. 4a. The communication interface 1202 is configured to support the computer device 120 in performing communication. For example, the communication interface 1202 may perform steps related to receiving or sending in the foregoing method embodiments. The memory 1203 is configured to store program code and data of a database server.

The processor 1201 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function. For example, the processor may be a combination of one or more microprocessors or a combination of the digital signal processor and a microprocessor. The bus 1204 may be a peripheral component interconnect (PCI) bus, an extended industry standard architecture (EISA) bus, or the like. Buses may be classified into an address bus, a data bus, a control bus, and the like. For ease of representation, only one bold line is used to indicate the bus in FIG. 12, but this does not mean that there is only one bus or only one type of bus.

In another embodiment of this application, a chip system is further provided. The chip system includes a processor that is configured to support a time series data injection apparatus or a time series data query apparatus in implementing the virtual machine migration method described in the embodiment shown in FIG. 4a. In a possible design, the chip system may further include a memory, and the memory is configured to store program instructions and data that are necessary for an apparatus used to manage data of an application program. The chip system may include a chip, or may include a chip and another discrete component.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in embodiments of this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or another form.

The units described as separate parts may or may not be physically separate, and parts displayed as units may or may not be physical units, that is, the parts may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When functions are implemented in the form of a software functional unit and sold or used as an independent product, the functions may be stored in a computer-readable storage medium. Based on such an understanding, the technical solutions of embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device, or the like) to perform all or some of the steps of the methods described in embodiments of this application. The foregoing storage medium includes any medium that can store program code, such as a USB flash drive, a removable hard disk, a read-only memory (ROM), a random access memory (RAM), a magnetic disk, or an optical disc.

The foregoing descriptions are merely specific implementations of embodiments of this application, and the protection scope of embodiments of this application shall be subject to the protection scope of the claims.

## Claims

1. A virtual machine migration method, applied to a physical machine, wherein a plurality of VMs comprising a first virtual machine VM and a second VM run on the physical machine, and the method comprises:
obtaining (401) a migration cost of the first VM and a migration cost of the second VM, wherein the migration cost indicates a computing resource required during VM live migration;
performing (402), based on a case in which the migration cost of the first VM is less than the migration cost of the second VM, live migration on the first VM by using a first computing resource, wherein the first computing resource is an idle computing resource in the physical machine; and
performing (403), based on a case in which live migration on the first VM is completed, live migration on the second VM by using a second computing resource, wherein the second computing resource is a computing resource allocated when the first VM runs on the physical machine,
wherein before the performing (403), based on a case in which live migration on the first VM is completed, live migration on the second VM by using a second computing resource, the method further comprises:
determining N second threads based on a size of the second computing resource, wherein a value of N is positively correlated with the size of the second computing resource, and the N second threads are configured to perform compression processing on migration data by using the second computing resource during VM live migration; and
the performing live migration on the second VM by using a second computing resource comprises:
compressing the migration data in the second VM in parallel by using the N second threads, to obtain compressed migration data; and
performing live migration on the second VM by using the second computing resource based on the compressed migration data.

2. The method according to claim 1, wherein the obtaining (401) a migration cost of the first VM and a migration cost of the second VM comprises:
obtaining dirty page change rates of the first VM and the second VM, and determining the migration cost of the first VM and the migration cost of the second VM based on the dirty page change rates, wherein the migration cost is positively correlated with the dirty page change rate.

3. The method according to claim 2, wherein the obtaining dirty page change rates of the first VM and the second VM comprises:
randomly sampling a plurality of memory pages in a virtual memory of the first VM and a plurality of memory pages in a virtual memory of the second VM; and
determining the dirty page change rates of the first VM and the second VM based on a change status of a hash value of each of the plurality of memory pages before and after a preset time interval, wherein the hash value of each memory page is obtained through calculation by using a hardware hash instruction.

4. The method according to claim 1, wherein the obtaining (401) a migration cost of the first VM and a migration cost of the second VM comprises:
obtaining sizes of memory refresh ranges of the first VM and the second VM, and determining the migration cost of the first VM and the migration cost of the second VM based on the sizes of the memory refresh ranges, wherein the migration cost is positively correlated with the size of the memory refresh range.

5. The method according to claim 4, wherein the obtaining sizes of memory refresh ranges of the first VM and the second VM comprises:
randomly sampling a plurality of memory pages in a virtual memory of the first VM and a plurality of memory pages in a virtual memory of the second VM; and
determining the sizes of the memory refresh ranges of the first VM and the second VM based on a change status of a hash value of each of the plurality of memory pages before and after a preset time interval, wherein the hash value of each memory page is obtained through calculation by using a hardware hash instruction.

6. The method according to claim 3 or 5, wherein the randomly sampling a plurality of memory pages in a virtual memory of the first VM and a plurality of memory pages in a virtual memory of the second VM comprises:
separately dividing the virtual memory of the first VM and the virtual memory of the second VM into M memory blocks, wherein one first thread is allocated to each memory block;
randomly sampling, by using each of M first threads, a plurality of memory pages in a corresponding memory block; and
calculating in parallel, by using each of the M first threads, change statuses of hash values of the plurality of memory pages in the corresponding memory block before and after the preset time interval.

7. The method according to any one of claims 1 to 6, wherein a third VM also runs on the physical machine; and
before the performing (403) live migration on the second VM by using a second computing resource, the method further comprises:
calculating, based on a case in which live migration on the first VM is completed, compression performance of the second VM and compression performance of the third VM by using the second computing resource, wherein the compression performance indicates a data compression rate for performing compression processing on data of a VM and/or a data compression speed for performing compression processing on the data of the VM; and
performing, based on a case in which the compression performance of the second VM is higher than the compression performance of the third VM, live migration on the second VM by using the second computing resource.

8. The method according to claim 7, wherein the calculating compression performance of the second VM and compression performance of the third VM by using the second computing resource comprises:
separately dividing the virtual memory of the second VM and a virtual memory of the third VM into X memory blocks, wherein one third thread is allocated to each memory block;
randomly sampling, by using each of X third threads, a plurality of memory pages in a corresponding memory block; and
compressing in parallel, by using each of the X third threads, the plurality of memory pages in the corresponding memory block, to obtain a compression result, wherein the compression result is used to determine the compression performance of the second VM and the compression performance of the third VM.

9. The method according to claim 7 or 8, wherein after the performing (403) live migration on the second VM by using the second computing resource, the method further comprises:
performing, based on a case in which live migration on the second VM is completed, live migration on the third VM by using the second computing resource and/or a third computing resource, wherein the third computing resource is a computing resource allocated when the second VM runs on the physical machine.

10. A virtual machine migration apparatus (1000), applied to a physical machine, wherein a plurality of VMs comprising a first virtual machine VM and a second VM run on the physical machine, and the apparatus (1000) comprises:
an obtaining module (1001), configured to obtain a migration cost of the first VM and a migration cost of the second VM, wherein the migration cost indicates a computing resource required during VM live migration; and
a live migration module (1002), configured to: perform, based on a case in which the migration cost of the first VM is less than the migration cost of the second VM, live migration on the first VM by using a first computing resource, wherein the first computing resource is an idle computing resource in the physical machine; and perform, based on a case in which live migration on the first VM is completed, live migration on the second VM by using a second computing resource, wherein the second computing resource is a computing resource allocated when the first VM runs on the physical machine,
wherein before performing, based on a case in which live migration on the first VM is completed, live migration on the second VM by using the second computing resource, the obtaining module (1001) is further configured to:
determine N second threads based on a size of the second computing resource, wherein a value of N is positively correlated with the size of the second computing resource, and the N second threads are configured to perform compression processing on migration data by using the second computing resource during VM live migration; and
the live migration module (1002) is specifically configured to:
compress the migration data in the second VM in parallel by using the N second threads, to obtain compressed migration data; and
perform live migration on the second VM by using the second computing resource based on the compressed migration data.

11. The apparatus (1000) according to claim 10, wherein the obtaining module (1001) is specifically configured to:
obtain dirty page change rates of the first VM and the second VM, and determine the migration cost of the first VM and the migration cost of the second VM based on the dirty page change rates, wherein the migration cost is positively correlated with the dirty page change rate.

12. A computer-readable storage medium, storing a computer program, wherein when the program is executed by a computer, the method according to any one of claims 1 to 9 is implemented.

13. A computer program product, comprising computer-readable instructions, wherein when the computer-readable instructions are run on a computer, the computer is enabled to perform the method according to any one of claims 1 to 9.

## Patentansprüche

1. Migrationsverfahren für virtuelle Maschinen, das auf eine physische Maschine angewendet wird, wobei eine Vielzahl von VMs, die eine erste virtuelle Maschine VM und eine zweite VM umfassen, auf der physischen Maschine ausgeführt werden, und das Verfahren umfasst:
Erhalten (401) von Migrationskosten der ersten VM und von Migrationskosten der zweiten VM, wobei die Migrationskosten eine während der VM-Live-Migration erforderliche Rechenressource angeben;
Durchführen (402), basierend auf einem Fall, in dem die Migrationskosten der ersten VM geringer sind als die Migrationskosten der zweiten VM, der Live-Migration auf der ersten VM durch Verwenden einer ersten Rechenressource, wobei die erste Rechenressource eine ungenutzte Rechenressource in der physischen Maschine ist; und
Durchführen (403), basierend auf einem Fall, in dem die Live-Migration auf der ersten VM abgeschlossen ist, der Live-Migration auf der zweiten VM durch Verwenden einer zweiten Rechenressource, wobei die zweite Rechenressource eine Rechenressource ist, die zugewiesen wird, wenn die erste VM auf der physischen Maschine ausgeführt wird,
wobei vor dem Durchführen (403), basierend auf einem Fall, in dem die Live-Migration auf der ersten VM abgeschlossen ist, der Live-Migration auf der zweiten VM durch Verwenden einer zweiten Computerressource, das Verfahren ferner umfasst:
Bestimmen von N zweiten Threads basierend auf einer Größe der zweiten Rechenressource, wobei ein Wert von N mit der Größe der zweiten Rechenressource positiv korreliert ist, und die N zweiten Threads konfiguriert sind, um während der VM-Live-Migration durch Verwenden der zweiten Rechenressource Komprimierungsverarbeitungen an Migrationsdaten durchzuführen; und
das Durchführen der Live-Migration auf der zweiten VM durch Verwenden einer zweiten Rechenressource umfasst:
paralleles Komprimieren der Migrationsdaten in der zweiten VM durch Verwenden der N zweiten Threads, um komprimierte Migrationsdaten zu erhalten; und
Durchführen der Live-Migration auf der zweiten VM durch Verwenden der zweiten Rechenressource basierend auf den komprimierten Migrationsdaten.

2. Verfahren nach Anspruch 1, wobei das Erhalten (401) der Migrationskosten der ersten VM und der Migrationskosten der zweiten VM umfasst:
Erhalten von Dirty-Page-Änderungsraten der ersten VM und der zweiten VM und Bestimmen der Migrationskosten der ersten VM und der Migrationskosten der zweiten VM basierend auf den Dirty-Page-Änderungsraten, wobei die Migrationskosten mit der Dirty-Page-Änderungsrate positiv korreliert sind.

3. Verfahren nach Anspruch 2, wobei das Erhalten von Dirty-Page-Änderungsraten der ersten VM und der zweiten VM umfasst:
zufälliges Auswählen einer Vielzahl von Speicherseiten in einem virtuellen Speicher der ersten VM und einer Vielzahl von Speicherseiten in einem virtuellen Speicher der zweiten VM; und
Bestimmen der Dirty-Page-Änderungsraten der ersten VM und der zweiten VM basierend auf einem Änderungsstatus eines Hash-Werts jeder der Vielzahl von Speicherseiten vor und nach einem voreingestellten Zeitintervall, wobei der Hash-Wert jeder Speicherseite mittels Berechnung durch Verwenden einer Hardware-Hash-Anweisung erhalten wird.

4. Verfahren nach Anspruch 1, wobei das Erhalten (401) der Migrationskosten der ersten VM und der Migrationskosten der zweiten VM umfasst:
Erhalten von Größen von Speicheraktualisierungsbereichen der ersten VM und der zweiten VM und Bestimmen der Migrationskosten der ersten VM und der Migrationskosten der zweiten VM basierend auf den Größen der Speicheraktualisierungsbereiche, wobei die Migrationskosten mit der Größe des Speicheraktualisierungsbereichs positiv korreliert sind.

5. Verfahren nach Anspruch 4, wobei das Erhalten von Größen von Speicheraktualisierungsbereichen der ersten VM und der zweiten VM umfasst:
zufälliges Auswählen einer Vielzahl von Speicherseiten in einem virtuellen Speicher der ersten VM und einer Vielzahl von Speicherseiten in einem virtuellen Speicher der zweiten VM; und
Bestimmen der Größen der Speicheraktualisierungsbereiche der ersten VM und der zweiten VM basierend auf einem Änderungsstatus eines Hash-Werts jeder der Vielzahl von Speicherseiten vor und nach einem voreingestellten Zeitintervall, wobei der Hash-Wert jeder Speicherseite mittels Berechnung durch Verwendung einer Hardware-Hash-Anweisung erhalten wird.

6. Verfahren nach Anspruch 3 oder 5, wobei das zufällige Auswählen einer Vielzahl von Speicherseiten in einem virtuellen Speicher der ersten VM und einer Vielzahl von Speicherseiten in einem virtuellen Speicher der zweiten VM umfasst:
separates Aufteilen des virtuellen Speichers der ersten VM und des virtuellen Speichers der zweiten VM in M Speicherblöcke, wobei jedem Speicherblock ein erster Thread zugewiesen wird;
zufälliges Auswählen, durch Verwenden jedes von M ersten Threads, einer Vielzahl von Speicherseiten in einem entsprechenden Speicherblock; und
paralleles Berechnen, durch Verwenden jedes der M ersten Threads, von Änderungsstatus von Hash-Werten der Vielzahl von Speicherseiten in dem entsprechenden Speicherblock vor und nach dem voreingestellten Zeitintervall.

7. Verfahren nach einem der Ansprüche 1 bis 6, wobei eine dritte VM ebenso auf der physischen Maschine ausgeführt wird; und
vor dem Durchführen (403) der Live-Migration auf der zweiten VM durch Verwenden einer zweiten Rechenressource, das Verfahren ferner umfasst:
Berechnen, basierend auf einem Fall, in dem die Live-Migration auf der ersten VM abgeschlossen ist, von Komprimierungsleistung der zweiten VM und von Komprimierungsleistung der dritten VM durch Verwenden der zweiten Rechenressource, wobei die Komprimierungsleistung eine Datenkomprimierungsrate zum Durchführen einer Komprimierungsverarbeitung an Daten einer VM und/oder eine Datenkomprimierungsgeschwindigkeit zum Durchführen einer Komprimierungsverarbeitung an den Daten der VM angibt; und
Durchführen, basierend auf einem Fall, in dem die Komprimierungsleistung der zweiten VM höher ist als die Komprimierungsleistung der dritten VM, der Live-Migration auf der zweiten VM durch Verwenden der zweiten Rechenressource.

8. Verfahren nach Anspruch 7, wobei das Berechnen von Komprimierungsleistung der zweiten VM und von Komprimierungsleistung der dritten VM durch Verwenden der zweiten Rechenressource umfasst:
separates Aufteilen des virtuellen Speichers der zweiten VM und eines virtuellen Speichers der dritten VM in X Speicherblöcke, wobei jedem Speicherblock ein dritter Thread zugewiesen wird;
zufälliges Auswählen, durch Verwenden jedes von X dritten Threads, einer Vielzahl von Speicherseiten in einem entsprechenden Speicherblock; und
paralleles Komprimieren, durch Verwenden jedes der X dritten Threads, der Vielzahl von Speicherseiten in dem entsprechenden Speicherblock, um ein Komprimierungsergebnis zu erhalten, wobei das Komprimierungsergebnis verwendet wird, um die Komprimierungsleistung der zweiten VM und die Komprimierungsleistung der dritten VM zu bestimmen.

9. Verfahren nach Anspruch 7 oder 8, wobei nach dem Durchführen (403) der Live-Migration auf der zweiten VM durch Verwenden der zweiten Rechenressource, das Verfahren ferner umfasst:
Durchführen, basierend auf einem Fall, in dem die Live-Migration auf der zweiten VM abgeschlossen ist, der Live-Migration auf der dritten VM durch Verwenden der zweiten Rechenressource und/oder einer dritten Rechenressource, wobei die dritte Rechenressource eine Rechenressource ist, die zugewiesen wird, wenn die zweite VM auf der physischen Maschine ausgeführt wird.

10. Migrationseinrichtung (1000) für virtuelle Maschinen, die auf eine physische Maschine angewendet wird, wobei eine Vielzahl von VMs, die eine erste virtuelle Maschine VM und eine zweite VM umfassen, auf der physischen Maschine ausgeführt werden, und die Einrichtung (1000) umfasst:
ein Erhaltungsmodul (1001), das konfiguriert ist, um Migrationskosten der ersten VM und Migrationskosten der zweiten VM zu erhalten, wobei die Migrationskosten eine während der VM-Live-Migration erforderliche Rechenressource angeben; und
ein Live-Migrationsmodul (1002), das konfiguriert ist zum: Durchführen, basierend auf einem Fall, in dem die Migrationskosten der ersten VM geringer sind als die Migrationskosten der zweiten VM, der Live-Migration auf der ersten VM durch Verwenden einer ersten Rechenressource, wobei die erste Rechenressource eine ungenutzte Rechenressource in der physischen Maschine ist; und Durchführen,
basierend auf einem Fall, in dem die Live-Migration auf der ersten VM abgeschlossen ist, der Live-Migration auf der zweiten VM durch Verwenden einer zweiten Rechenressource, wobei die zweite Rechenressource eine Rechenressource ist, die zugewiesen wird, wenn die erste VM auf der physischen Maschine ausgeführt wird,
wobei vor dem Durchführen, basierend auf einem Fall, in dem die Live-Migration auf der ersten VM abgeschlossen ist, der Live-Migration auf der zweiten VM durch Verwenden der zweiten Computerressource, das Erhaltungsmodul (1001) ferner konfiguriert ist zum:
Bestimmen von N zweiten Threads basierend auf einer Größe der zweiten Rechenressource, wobei ein Wert von N mit der Größe der zweiten Rechenressource positiv korreliert ist, und die N zweiten Threads konfiguriert sind, um während der VM-Live-Migration durch Verwenden der zweiten Rechenressource Komprimierungsverarbeitungen an Migrationsdaten durchzuführen; und
das Live-Migrationsmodul (1002) speziell konfiguriert ist zum:
parallelen Komprimieren der Migrationsdaten in der zweiten VM durch Verwenden der N zweiten Threads, um komprimierte Migrationsdaten zu erhalten; und
Durchführen der Live-Migration auf der zweiten VM durch Verwenden der zweiten Rechenressource basierend auf den komprimierten Migrationsdaten.

11. Einrichtung (1000) nach Anspruch 10, wobei das Erhaltungsmodul (1001) speziell konfiguriert ist zum:
Erhalten von Dirty-Page-Änderungsraten der ersten VM und der zweiten VM und Bestimmen der Migrationskosten der ersten VM und der Migrationskosten der zweiten VM basierend auf den Dirty-Page-Änderungsraten, wobei die Migrationskosten mit der Dirty-Page-Änderungsrate positiv korreliert sind.

12. Computerlesbares Speicherungsmedium, das ein Computerprogramm speichert, wobei, wenn das Programm durch einen Computer laufen gelassen wird, das Verfahren nach einem der Ansprüche 1 bis 9 implementiert wird.

13. Computerprogrammprodukt, das computerlesbare Anweisungen umfasst, wobei, wenn die computerlesbaren Anweisungen auf einem Computer ausgeführt werden, der Computer aktiviert wird, um das Verfahren nach einem der Ansprüche 1 bis 9 durchzuführen.

## Revendications

1. Procédé de migration de machine virtuelle, appliqué à une machine physique, dans lequel une pluralité de VM comprenant une première machine virtuelle VM et une deuxième VM s'exécutent sur la machine physique, et le procédé comprend :
l'obtention (401) d'un coût de migration de la première VM et d'un coût de migration de la deuxième VM, dans lequel le coût de migration indique une ressource informatique requise pendant une migration en direct de VM ;
la réalisation (402), sur la base d'un cas dans lequel le coût de migration de la première VM est inférieur au coût de migration de la deuxième VM, d'une migration en direct sur la première VM en utilisant une première ressource informatique, dans lequel la première ressource informatique est une ressource informatique inactive dans la machine physique ; et
la réalisation (403), sur la base d'un cas dans lequel une migration en direct sur la première VM est terminée, d'une migration en direct sur la deuxième VM en utilisant une deuxième ressource informatique, dans lequel la deuxième ressource informatique est une ressource informatique attribuée lorsque la première VM s'exécute sur la machine physique,
dans lequel, avant la réalisation (403), sur la base d'un cas dans lequel une migration en direct sur la première VM est terminée, d'une migration en direct sur la deuxième VM en utilisant une deuxième ressource informatique, le procédé comprend en outre :
la détermination de N deuxièmes fils sur la base d'une taille de la deuxième ressource informatique, dans lequel une valeur de N est positivement mise en corrélation avec la taille de la deuxième ressource informatique, et les N deuxièmes fils sont configurés pour réaliser un traitement de compression sur des données de migration en utilisant la deuxième ressource informatique pendant une migration en direct de VM ; et
la réalisation d'une migration en direct sur la deuxième VM en utilisant une deuxième ressource informatique comprend :
la compression des données de migration dans la deuxième VM en parallèle, en utilisant les N deuxièmes fils, afin d'obtenir des données de migration comprimées ; et
la réalisation d'une migration en direct sur la deuxième VM en utilisant la deuxième ressource informatique sur la base des données de migration comprimées.

2. Procédé selon la revendication 1, dans lequel l'obtention (401) d'un coût de migration de la première VM et d'un coût de migration de la deuxième VM comprend :
l'obtention de taux de modification de page de modifications de la première VM et de la deuxième VM, et la détermination du coût de migration de la première VM et du coût de migration de la deuxième VM sur la base des taux de modification de page de modifications, dans lequel le coût de migration est positivement mis en corrélation avec le taux de modification de page de modifications.

3. Procédé selon la revendication 2, dans lequel l'obtention de taux de modification de pages de modifications de la première VM et de la deuxième VM comprend :
l'échantillonnage aléatoire d'une pluralité de pages mémoire dans une mémoire virtuelle de la première VM et d'une pluralité de pages mémoire dans une mémoire virtuelle de la deuxième VM ; et
la détermination des taux de modification de page de modifications de la première VM et de la deuxième VM sur la base d'un état de modification d'une valeur de hachage de chacune de la pluralité de pages mémoire avant et après un intervalle de temps prédéfini, dans lequel la valeur de hachage de chaque page mémoire est obtenue par calcul en utilisant une instruction de hachage matérielle.

4. Procédé selon la revendication 1, dans lequel l'obtention (401) d'un coût de migration de la première VM et d'un coût de migration de la deuxième VM comprend :
l'obtention de tailles de plages de rafraîchissement de mémoire de la première VM et de la deuxième VM, et la détermination du coût de migration de la première VM et du coût de migration de la deuxième VM sur la base des tailles des plages de rafraîchissement de mémoire, dans lequel le coût de migration est positivement mis en corrélation avec la taille de la plage de rafraîchissement de mémoire.

5. Procédé selon la revendication 4, dans lequel l'obtention de tailles de plages de rafraîchissement de mémoire de la première VM et de la deuxième VM comprend :
l'échantillonnage aléatoire d'une pluralité de pages mémoire dans une mémoire virtuelle de la première VM et d'une pluralité de pages mémoire dans une mémoire virtuelle de la deuxième VM ; et
la détermination des tailles des plages de rafraîchissement de mémoire de la première VM et de la deuxième VM sur la base d'un état de modification d'une valeur de hachage de chacune de la pluralité de pages mémoire avant et après un intervalle de temps prédéfini, dans lequel la valeur de hachage de chaque page mémoire est obtenue par calcul en utilisant une instruction de hachage matérielle.

6. Procédé selon la revendication 3 ou 5, dans lequel l'échantillonnage aléatoire d'une pluralité de pages mémoire dans une mémoire virtuelle de la première VM et d'une pluralité de pages mémoire dans une mémoire virtuelle de la deuxième VM comprend :
la division, de manière distincte, de la mémoire virtuelle de la première VM et de la mémoire virtuelle de la deuxième VM en M blocs de mémoire, dans lequel un premier fil est attribué à chaque bloc de mémoire ;
l'échantillonnage aléatoire, en utilisant chacun des M premiers fils, d'une pluralité de pages mémoire dans un bloc de mémoire correspondant ; et
le calcul en parallèle, en utilisant chacun des M premiers fils, d'états de modification de valeurs de hachage de la pluralité de pages mémoire dans le bloc de mémoire correspondant avant et après l'intervalle de temps prédéfini.

7. Procédé selon l'une quelconque des revendications 1 à 6, dans lequel la troisième VM s'exécute également sur une machine physique ; et
avant la réalisation (403) d'une migration en direct sur la deuxième VM en utilisant une deuxième ressource informatique, le procédé comprend en outre :
le calcul, sur la base d'un cas dans lequel une migration en direct sur la première VM est terminée, de performances de compression de la deuxième VM et de performances de compression de la troisième VM en utilisant la deuxième ressource informatique, dans lequel les performances de compression indiquent un taux de compression de données pour réaliser un traitement de compression sur des données d'une VM et/ou une vitesse de compression de données pour réaliser un traitement de compression sur les données de la VM ; et
la réalisation, sur la base d'un cas dans lequel les performances de compression de la deuxième VM sont supérieures aux performances de compression de la troisième VM, d'une migration en direct sur la deuxième VM en utilisant la deuxième ressource informatique.

8. Procédé selon la revendication 7, dans lequel le calcul de performances de compression de la deuxième VM et de performances de compression de la troisième VM en utilisant la deuxième ressource informatique comprend :
la division, de manière distincte, de la mémoire virtuelle de la deuxième VM et d'une mémoire virtuelle de la troisième VM en X blocs de mémoire, dans lequel un troisième fil est attribué à chaque bloc de mémoire ;
l'échantillonnage aléatoire, en utilisant chacun des X troisièmes fils, d'une pluralité de pages mémoire dans un bloc de mémoire correspondant ; et
la compression en parallèle, en utilisant chacun des X troisièmes fils, de la pluralité de pages mémoire dans le bloc de mémoire correspondant, afin d'obtenir un résultat de compression, dans lequel le résultat de compression est utilisé pour déterminer les performances de compression de la deuxième VM et les performances de compression de la troisième VM.

9. Procédé selon la revendication 7 ou 8, dans lequel après la réalisation (403) d'une migration en direct sur la deuxième VM en utilisant la deuxième ressource informatique, le procédé comprend en outre :
la réalisation, sur la base d'un cas dans lequel une migration en direct sur la deuxième VM est terminée, d'une migration en direct sur la troisième VM en utilisant la deuxième ressource informatique et/ou une troisième ressource informatique, dans lequel la troisième ressource informatique est une ressource informatique attribuée lorsque la deuxième VM s'exécute sur la machine physique.

10. Appareil de migration de machine virtuelle (1000), appliqué à une machine physique, dans lequel une pluralité de VM comprenant une première machine virtuelle VM et une deuxième VM s'exécutent sur la machine physique, et l'appareil (1000) comprend :
un module d'obtention (1001), configuré pour obtenir un coût de migration de la première VM et un coût de migration de la deuxième VM, dans lequel le coût de migration indique une ressource informatique requise pendant une migration en direct de VM ; et
un module de migration en direct (1002), configuré pour : réaliser, sur la base d'un cas dans lequel le coût de migration de la première VM est inférieur au coût de migration de la deuxième VM, une migration en direct sur la première VM en utilisant une première ressource informatique, dans lequel la première ressource informatique est une ressource informatique inactive dans la machine physique ; et réaliser, sur la base d'un cas dans lequel une migration en direct sur la première VM est terminée, une migration en direct sur la deuxième VM en utilisant une deuxième ressource informatique, dans lequel la deuxième ressource informatique est une ressource informatique attribuée lorsque la première VM s'exécute sur la machine physique,
dans lequel, avant la réalisation, sur la base d'un cas dans lequel une migration en direct sur la première VM est terminée, d'une migration en direct sur la deuxième VM en utilisant la deuxième ressource informatique, le module d'obtention (1001) est en outre configuré pour :
déterminer N deuxièmes fils sur la base d'une taille de la deuxième ressource informatique, dans lequel une valeur de N est positivement mise en corrélation avec la taille de la deuxième ressource informatique, et les N deuxièmes fils sont configurés pour réaliser un traitement de compression sur des données de migration en utilisant la deuxième ressource informatique pendant une migration en direct de VM ; et
le module de migration en direct (1002) est particulièrement configuré pour :
comprimer les données de migration dans la deuxième VM en parallèle en utilisant les N deuxièmes fils, afin d'obtenir des données de migration comprimées ; et
Réaliser une migration en direct sur la deuxième VM en utilisant la deuxième ressource informatique sur la base des données de migration comprimées.

11. Appareil (1000) selon la revendication 10, dans lequel le module d'obtention (1001) est particulièrement configuré pour :
obtenir des taux de modification de page de modifications de la première VM et de la deuxième VM, et déterminer le coût de migration de la première VM et le coût de migration de la deuxième VM sur la base des taux de modification de page de modifications, dans lequel le coût de migration est positivement mis en corrélation avec le taux de modification de page de modifications.

12. Support de stockage lisible par ordinateur, stockant un programme informatique, dans lequel, lorsque le programme est exécuté par un ordinateur, le procédé selon l'une quelconque des revendications 1 à 9 est mis en œuvre.

13. Produit-programme informatique, comprenant des instructions lisibles par ordinateur, dans lequel, lorsque les instructions lisibles par ordinateur sont exécutées sur un ordinateur, l'ordinateur est en mesure de réaliser le procédé selon l'une quelconque des revendications 1 à 9.
